(19) Europäisches Patentamt
European Patent Office
Office européen des brevets

(11) EP 4 601 216 A1

(12) EUROPEAN PATENT APPLICATION

(43) Date of publication:
**13.08.2025 Bulletin 2025/33**

(21) Application number: **24386011.1**

(22) Date of filing: **07.02.2024**

(51) International Patent Classification (IPC):
***H04B 7/185** (2006.01)* ***B64G 1/10** (2006.01)*

(52) Cooperative Patent Classification (CPC):
**H04B 7/18513; B64G 1/1085; H04B 7/18519;**
B64G 1/242

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Iceye Oy**
  **02150 Espoo (FI)**
- **Iceye Polska Sp. z.o.o.**
  **00-687 Warszawa (PL)**

(72) Inventors:
- **Lenfant, Ian**
  **00-687 Warszawa (PL)**
- **Mayeres, Jeremy**
  **02150 Espoo (FI)**
- **Gravanis, Dimitrios**
  **02150 Espoo (FI)**

(74) Representative: **Papula Oy**
**P.O. Box 981**
**00101 Helsinki (FI)**

# (54) METHODS AND SYSTEMS FOR ASSIGNING TASKS TO A CONSTELLATION OF SATELLITES

(57) One or more computer processors receive one or more tasks. Each task is associated with a task priority. For each task, a list of one or more opportunities is generated. Each opportunity corresponds to a satellite from the constellation of satellites potentially performing the task. Each opportunity is associated with an expected time for the satellite to potentially perform the task. Each opportunity is ranked based on each task priority and based on each expected time. One or more opportunities are selected based on the ranking. For each selected opportunity, the task associated with the selected opportunity is assigned to the satellite associated with the selected opportunity.

EP 4 601 216 A1

## Description

### Field

The present disclosure relates to satellite constellations and in particular to methods and systems for assigning tasks to a satellite constellation.

### Background

When a satellite constellation operator receives a task, such as an image acquisition request, the request must be transmitted (e.g. uplinked) to a particular satellite in the constellation. A given acquisition request will typically identify an area on the Earth that is to be imaged. Therefore, depending on each satellite's orbit, a given satellite may take more or less time to find itself in a position such that it may perform the acquisition. Added to this is the fact that each task may include additional constraints that must be taken into account, such as a desired time of acquisition and the resources available to perform the task.

If there is a relatively low number of satellites in the fleet, deciding which task to allocate to which satellite may not be particularly burdensome. However, as the fleet of satellites expands, it becomes more and more impractical for a human operator to rapidly and efficiently manage and schedule acquisitions, downlinks, and any other tasks across the whole fleet.

### Summary

According to a first aspect of the disclosure, there is provided a method of assigning tasks to a constellation of satellites, wherein the method is performed by one or more computer processors and comprises: receiving one or more tasks; for each task: (a) identifying one or more opportunities, wherein each opportunity corresponds to a satellite from the constellation of satellites potentially performing the task; and (b) generating, for each opportunity, a scheduling score based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink; and (c) assigning, based on each scheduling score, at least one of the one or more tasks to the satellite corresponding to an opportunity identified for the at least one task.

The one or more tasks may include a first task and a second task. Generating the scheduling score may comprise: generating a first scheduling score for an opportunity identified for the first task; and generating a second scheduling score for an opportunity identified for the second task, wherein the first and second scheduling scores are indicative that the first task is to be performed before the second task. Assigning the at least one task may comprise: assigning the first task to a first satellite, wherein the first satellite corresponds to the opportunity identified for the first task; and assigning the second task to the first satellite or to a second satellite, wherein the second satellite corresponds to the opportunity identified for the second task, wherein, in response to assigning the first task to the first satellite and the second task to the first satellite or the second satellite, the first satellite is scheduled to perform the first task before the first satellite or the second satellite is scheduled to perform the second task.

The first satellite and the second satellite may be the same satellite.

Identifying the one or more opportunities may comprise: determining one or more second task constraints relating to the task; and identifying the one or more opportunities based on the one or more second task constraints.

The one or more second task constraints may include one or more of the following constraints: a duration of the task; and a point in time by which the task must be completed.

At least one of the one or more received tasks may be an image acquisition. The one or more first task constraints may include one or more of the following constraints: an imaging geometry of the image acquisition; and an area of interest to be imaged.

At least one of the one or more received tasks may be an image acquisition.

Identifying the one or more opportunities may comprise: determining one or more satellite constraints relating to each satellite of the constellation of satellites; and identifying the one or more opportunities based on the one or more satellite constraints.

Determining the one or more satellite constraints relating to each satellite may comprise one or more of: obtaining a predicted orbit of each satellite; determining one or more imaging geometries relating to at least one imaging instrument of each satellite; and determining one or more parameters relating to a power availability of each satellite.

The method may further comprise uplinking an instruction to the satellite to which the assigned task has been assigned so as to cause the satellite to perform the assigned task.

The future downlink availability may comprise a duration of time between performance of the task and downlinking of data obtained as a result of performance of the task.

Generating the scheduling score may comprise generating the scheduling score based on the availability of the future downlink

Generating the scheduling score may be further based the seniority of the task. A task for which a longer period of time has elapsed since the task was received may be prioritized over a task for which a shorter period of time has elapsed since the task was received.

Generating the scheduling score may comprise: generating the scheduling score based on each of: the priority assigned to the task; the duration of time before the satellite corresponding to the opportunity is able to perform the task; and the seniority of the task, and the priority assigned to the task may be weighted more heavily than the duration of time before the satellite corresponding to the opportunity is able to perform the task which may be weighted more heavily than the seniority of the task.

Generating the scheduling score may be based the seniority of the task, and a task for which a longer period of time has elapsed since the task was received may be prioritized over a task for which a shorter period of time has elapsed since the task was received.

Generating the scheduling score may comprise: generating, for each opportunity, an initial score; and generating, for each opportunity, the scheduling score by optimizing each initial score based on one or more optimization constraints.

Generating the scheduling score by optimizing each initial score may comprise generating the scheduling score by linearly optimizing each initial score based on the one or more optimization constraints.

The one or more optimization constraints may include one or more of the following constraints: a minimum amount of time must separate a given satellite performing any two consecutive tasks assigned to the satellite; a given satellite cannot spend more than a maximum amount of time performing any task assigned to the satellite; a given satellite cannot spend, during a complete orbit of the satellite, more than a maximum amount of time performing one or more tasks assigned to the satellite; and a give task cannot be assigned to more than one satellite.

Identifying the one or more opportunities may comprise: identifying one or more initial opportunities; and filtering the one or more initial opportunities based on one or more requirements.

The one or more requirements may include a requirement that an opportunity cannot be identified for a satellite that is scheduled to perform a task within a preset time window running from a current point in time to a future point in time.

The preset time window may be based on: a minimum amount of time required for steps (a), (b), and (c) to be performed; and after the minimum amount of time has elapsed, an amount of time before the satellite is next scheduled to pass over a ground station.

Each satellite may be a synthetic aperture radar (SAR) satellite.

The method may further comprise: receiving a further task during one or more of steps (a), (b), and (c); and preventing the further task from being included in steps (a), (b), and (c).

The method may further comprise, prior to receiving the one or more tasks: for each task in a set of tasks, determining whether the task is locked; and if the task is locked, preventing the task from being included in steps (a), (b), and (c)

Determining whether the task is locked may comprise determining whether the task is scheduled to be executed within a preset time window running from a current point in time to a future point in time.

Generating the scheduling score may comprise performing constraint programming based one or more constraints.

Generating the scheduling score may comprise using linear programming by formulating the one or more task constraints as linear constraints.

The method may further comprise, prior to identifying the one or more opportunities: for at least one task of the one or more tasks, generating one or more updated opportunities, each updated opportunity corresponding to a satellite from the constellation of satellites potentially performing the task; and storing each updated opportunity in an opportunity cache; and identifying the one or more opportunities comprises extracting at least one updated opportunity from the opportunity cache.

According to a further aspect of the disclosure, there is provided a non-transitory computer-readable medium having stored thereon computer program code configured, when executed by one or more processors, to cause the one or more processors to perform a method of scheduling tasks for a constellation of satellites, the method comprising: receiving one or more tasks; for each task: identifying one or more opportunities, wherein each opportunity corresponds to a satellite from the constellation of satellites potentially performing the task; and generating, for each opportunity, a scheduling score based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink; and assigning, based on each scheduling score, at least one of the one or more tasks to the satellite corresponding to an opportunity identified for the at least one task

According to a further aspect of the disclosure, there is provided a computer-readable medium storing computer program code configured, when executed by one or more processors, to cause the one or more processors to perform a method of assigning tasks to a constellation of satellites, according to any of the above-described methods.

According to a further aspect of the disclosure, there is provided a system comprising: a constellation of satellites; one or more ground stations; and a computer-implemented scheduling device configured to: receive one or more tasks; for each task: identify one or more opportunities, wherein each opportunity corresponds to a satellite from the constellation of satellites potentially performing the task; and generate, for each opportunity, a scheduling score based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink; assign, based on each scheduling score, at least one of the one or more tasks to the satellite corresponding to an opportunity identified for the at least one task; and uplink an instruction to the satellite to which the assigned task has been assigned so as to cause the satellite to perform the assigned task.

According to a further aspect of the disclosure, there is provided a method of assigning tasks to a constellation of satellites, wherein the method is performed by one or more computer processors and comprises: receiving one or more tasks, wherein each task is associated with a task priority; for each task, generating a list of one or more opportunities, wherein each opportunity corresponds to a satellite from the constellation of satellites potentially performing the task, and wherein each opportunity is associated with an expected time for the satellite to potentially perform the task; ranking each opportunity based on each task priority and based on each expected time; selecting, based on the ranking, one or more opportunities; and for each selected opportunity, assigning the task associated with the selected opportunity to the satellite associated with the selected opportunity.

Each task may be further associated with a task age. For a first opportunity associated with a first task having a first task priority and a first task age, and for a second opportunity associated with a second task having a second task priority and a second task age, wherein the first and second task priorities are the same, and wherein the first task age is greater than the second task age, ranking each opportunity may comprise ranking the first opportunity higher than the second opportunity.

Ranking each opportunity may comprise: ranking each opportunity based on each task priority; and for each ranked opportunity associated with the same task priority, further ranking the ranked opportunities based on each expected time.

Selecting the one or more opportunities may comprise: sequentially determining, from the highest-ranked opportunity to the lowest-ranked opportunity, whether each opportunity should be selected; and for each opportunity that is determined to be selected, selecting the opportunity.

Selecting the one or more opportunities may comprise: selecting a first opportunity; and before determining whether a second, lower-ranked opportunity should be selected, discarding each non-selected opportunity associated with the task associated with the selected first opportunity.

Selecting the one or more opportunities may comprise, for each of the one or more opportunities: determining whether the opportunity meets a conflict condition; and in response to determining that the opportunity does not meet the conflict condition, selecting the opportunity.

Determining whether the opportunity meets the conflict condition may comprise determining whether the opportunity violates an orbit condition.

Determining whether the opportunity meets the conflict condition may comprise determining whether the opportunity conflicts with a selected higher-ranked opportunity.

Determining whether the opportunity conflicts with a selected higher-ranked opportunity may comprise, for (1) each selected higher-ranked opportunity and (2) the opportunity, determining whether task data associated with the opportunity can be downlinked according to one or more criteria.

Determining whether the task data can be downlinked may comprise: identifying, for (1) each selected higher-ranked opportunity and (2) the opportunity, one or more passes, wherein a pass is a period of time during which the satellite associated with the opportunity can perform downlinking to a ground station; and determining, based on the identified one or more passes, whether the task data for (1) each selected higher-ranked opportunity and (2) the opportunity can be downlinked according to the one or more criteria.

Identifying the one or more passes may comprise: identifying the one or more passes; and storing a copy of the identified one or more passes as a copy of pass data. Determining whether the task data can be downlinked may comprise determining whether the task data can be downlinked based on the copy of pass data. The method may further comprise, after determining whether the task data can be downlinked, discarding the copy of pass data.

Identifying the one or more passes may comprise: identifying the one or more passes; determining that the opportunity overlaps at least one identified pass; and shortening the at least one identified pass to remove the overlap; and determining, based on the identified one or more passes including the at least one shortened pass, whether the task data for (1) each selected higher-ranked opportunity and (2) the opportunity can be downlinked according to the one or more criteria.

Determining, based on the identified one or more passes, whether the task data can be downlinked may comprise: identifying, from among the one or more identified passes, a subset of the one or more passes; and determining, based on the subset of the one or more identified passes, whether the task data can be downlinked.

Identifying the subset of the one or more passes may comprise: identifying, based on each task associated with (1) each selected higher-ranked opportunity and (2) the opportunity, one or more permitted ground stations; and identifying, based on the one or more permitted ground stations, the subset of the one or more passes.

Identifying the subset of the one or more passes may comprise: identifying, from among the one or more identified passes, at least a first pass that overlaps with at least a second pass; shortening the first pass to remove the overlap; and identifying, based on the shortened pass, the subset of the one or more passes.

Selecting the one or more opportunities may comprise, sequentially from the highest-ranked opportunity to the lowest-ranked opportunity: (1) determining that the opportunity does not meet a conflict condition; and selecting the opportunity; or (2) determining that the opportunity meets the conflict condition; and not selecting the opportunity and moving to the next opportunity in the ranking.

Generating the list of one or more opportunities may comprise: identifying one or more opportunities, wherein each identified opportunity corresponds to a satellite from the constellation of satellites potentially performing the task according to a time constraint associated with the task; and generating the list of one or more opportunities based on the identified one or more opportunities.

According to a further aspect of the disclosure, there is provided a computer-readable medium storing computer program code configured, when executed by one or more processors, to cause the one or more processors to perform a method of assigning tasks to a constellation of satellites, according to any of the above-described methods.

According to a further aspect of the disclosure, there is provided a system comprising: a constellation of satellites; one or more ground stations; and a computer-implemented scheduling device configured to: receive one or more tasks, wherein each task is associated with a task priority; for each task, generate a list of one or more opportunities, wherein each opportunity corresponds to a satellite from the constellation of satellites potentially performing the task, and wherein each opportunity is associated with an expected time for the satellite to potentially perform the task; rank each opportunity based on each task priority and based on each expected time; select, based on the ranking, one or more opportunities; for each selected opportunity, assign the task associated with the selected opportunity to the satellite associated with the selected opportunity; and uplink an instruction to the satellite to which the assigned task has been assigned so as to cause the satellite to perform the assigned task.

This summary does not necessarily describe the entire scope of all aspects. Other aspects, features and advantages will be apparent to those of ordinary skill in the art upon review of the following description of specific embodiments.

## Brief Description of the Drawings

Embodiments of the disclosure will now be described in detail in conjunction with the accompanying drawings of which:

FIG. 1 is a perspective view of the Earth, a satellite, and a ground station;

FIG. 2 is a map of the Earth showing the coverage of one satellite in 24 hours;

FIG. 3 is a schematic diagram of the Earth, an example satellite, and a system for managing a constellation of satellites;

FIG. 4 is a map of the Earth showing the coverage of 18 satellites in 3 hours;

FIG. 5 is a map of the Earth showing the coverage of 18 satellites in 24 hours;

FIG. 6 is a schematic diagram of a schedule calculation module of the above system, a satellite database, and a channel database;

FIG. 7 is a schematic diagram of an order for an image of a location;

FIG. 8A is a schematic diagram showing details of the above schedule calculation module;

FIG. 8B is a pair of tables showing acquisition opportunities to acquire an image of Tokyo in scenarios having 1 and 18 Earth observation satellites, respectively;

FIG. 9 is a schematic diagram showing details of the above satellite database;

FIG. 10 is a schematic diagram showing details of the above channel database;

FIG. 11 is a schematic diagram showing schedule information to be uploaded to a constellation of satellites;

FIG. 12 is a flow diagram showing a method of generating updated schedules for a constellation of satellites;

FIG. 13 is a flow diagram showing an example implementation of the above method of generating updated schedules for a constellation of satellites;

FIG. 14 depicts a block diagram of a computer system that may be used to assign tasks to a constellation of satellites;

FIG. 15 is a flow diagram of a method of assigning tasks to a constellation of satellites, according to an embodiment of the disclosure;

FIG. 16 shows different red zones for different satellites, based on estimated passes for each satellite, according to an embodiment of the disclosure;

FIG. 17 shows a flow diagram of a method of processing tasks, according to an embodiment of the disclosure;

FIG. 18 depicts a system for capturing synthetic aperture radar images;

FIG. 19 is a flow diagram of a method of assigning tasks to a constellation of satellites, according to an embodiment of the disclosure;

FIG. 20 is a first flow diagram of a method of determining whether an opportunity meets a conflict condition, according to an embodiment of the disclosure;

FIG. 21 is a schematic diagram of a pass bring shortened to remove an overlap, according to an embodiment of the disclosure; and

FIG. 22 is a second flow diagram of a method of determining whether an opportunity meets a conflict condition, according to an embodiment of the disclosure .

**Detailed Description**

The present disclosure seeks to provide methods and systems for assigning tasks to a constellation of satellites. While various embodiments of the disclosure are described below, the disclosure is not limited to these embodiments, and variations of these embodiments may well fall within the scope of the disclosure which is to be limited only by the appended claims.

Generally, according to embodiments of the disclosure, there are described computer-implemented methods in which one or more tasks are received. Each task may be, for example, an image acquisition request that identifies an area of the Earth that is to be imaged. For each task, one or more opportunities are identified. Each opportunity corresponds to a satellite from the constellation of satellites potentially performing the task. For example, it may be determined that certain satellites are incapable of executing the task within the constraints defined in the task, and therefore no opportunities would be identified for such satellites. Any satellite that may be able to perform the task within the constraints defined in the task, as well as within constrains specific to the satellite, may have a corresponding opportunity associated with the satellite.

For each opportunity, a scheduling score is generated. Generating the scheduling score may comprise generating, for each opportunity, an initial score, and then generating, for each opportunity, the scheduling score by optimizing each initial score based on one or more optimization constraints. Based on each scheduling score, at least one of the one or more tasks is assigned to the satellite corresponding to an opportunity identified for the at least one task. Assigning the tasks in this manner may comprise generating a set of one or more activities and then transmitting the set of activities to the satellite. Each activity may have an associated execution time that indicates the point in time at which the satellite is to execute the activity. The activities may include, for example, performing the task, such as the image acquisition, and then downlinking the acquired image.

For example, according to some embodiments, a request for an image acquisition (or simply "acquisition") is added to a database. The request comprises, among other data, the location of the desired acquisition (Area of Interest - AoI) and the desired time of the acquisition. The request is also assigned a priority, for example based on business value. For instance, the customer making the request may agree to pay more for the priority of the request to be increased. The request may additionally include the type of acquisition that is to be made.

At a regular interval, tasks are fetched from the database. For each task, data from an Orbit Determination service is used to determine the time at which one or more satellites of the fleet will be passing over (the "overpass time") the AoI. For each satellite that will be passing over the AoI, if the satellite is not already scheduled to perform a task at the overpass time, or if the satellite is scheduled to perform a lower-priority task at the overpass time, then the overpass time is stored and referred to as an opportunity.

Each opportunity is then assigned a score based, for example, on the amount of time between the overpass time and the desired time of acquisition, the capacity and capability of the satellite, and also future downlink availability for the satellite, for example how soon after acquisition the satellite will be in a position to downlink the acquired image to a ground station. The future downlink availability could also be based on other factors such as an indication of whether a downlink is available within a certain specified amount of time, the cost of the downlink, the speed of the downlink, or others.

The highest-scoring opportunity is selected, and events or activities are created in that satellite's schedule in order to action the acquisition and downlink. The schedule is then transferred to the satellite, replacing any previous version assigned to the satellite.

According to some embodiments, at each pass of a satellite over a ground station, a schedule is uploaded to the satellite. This schedule contains time-stamped commands for the satellite to perform. For example, the satellite may be tasked to perform an image acquisition (or simply "acquisition"), downlink previously acquired images to a ground station, or perform one or more manoeuvres.

Other constraints may be taken into consideration when determining to which satellite a given task is to be assigned. For example, as explained above, a priority (such as a business-related priority) may be assigned to the task. In certain cases, tasks will not be assigned to a given satellite if, for example, the satellite is incapable of performing the task because of, for example, scheduled maintenance, the technical capabilities of the satellite, or other reservations of the satellite's time that cannot be rescheduled.

Advantageously, tasks that are received (for example, from a customer of the constellation operator) are automatically scheduled and assigned to appropriate satellites within the fleet. The downlink of any image data that is acquired may also be scheduled in a way that minimises the delay between acquisition and downlink. For example, the satellite's overpass time relative to one or more ground stations, as well as the ground stations' capacities and any business rules surrounding their use, may be determined. Based on this data, one or more downlink activities may be generated and assigned to the satellite after the acquisition has been executed.

Generally, the methods and systems described herein may allow for timely planning, capture, and delivery of acquisitions, and in particular acquisitions by Synthetic Aperture Radar (SAR) satellites. In a relatively short period of time, it may be possible to determine which satellite will be passing over the AoI at the desired time, and if the satellite is capable of handling the acquisition. The task may then be transformed into one or more activities for a specific satellite and scheduled on that satellite. The process may allow for more efficient usage of the fleet, and more effective prioritisation of requests.

Generally, although not exclusively, embodiments of the disclosure may relate to methods and systems for assigning tasks to a constellation of Synthetic Aperture Radar (SAR) satellites. SAR images are a type of image created by transmitting radar signals, receiving the reflected and scattered radar return signals, and processing the return signals in order to form an image. This is in contrast to optical imagery, a passive technology wherein images are captured by receiving light reflected or originating from an object. SAR technology, on the other hand, is an active rather than a passive technology since it relies on transmitting a radar signal rather than relying on sunlight or other light sources. A significant advantage of SAR technology over optical imagery is that SAR technology can image at night as well as through clouds and other adverse weather conditions. However, forming an image using SAR technology is generally more complex and generally requires significant signal processing of the returned echoes in order to decode them.

More particularly, SAR images are typically acquired from an aerial transmitter and receiver, such as a transmitter that comprises part of an airplane or a satellite. In conventional radar, the resolution of an image generated by measuring reflections of a radar signal is directly proportional to the wavelength of the radar signal and, consequently, the length of the antenna used to transmit and receive the radar signal. This means that the length of the antenna that would be required to capture high resolution images using conventional radar is often impractical, particularly for airborne use.

In contrast, SAR images are captured using a "synthetic aperture". A shorter and consequently more practical antenna is used on a moving platform to make a series of measurements of reflected radar signals, and those measurements are combined to simulate a much larger antenna. Consequently, the resolution of a SAR image corresponds to the resolution of a conventional radar image captured using an antenna much larger than the one used to capture the SAR image.

Scheduling tasks for a constellation of SAR satellites can also be quite different from scheduling tasks for optical satellites, and as such satellite scheduling techniques developed primarily for optical satellites cannot be applied directly for scheduling a constellation of SAR satellites. In addition to the differences mentioned above, optical satellites typically image straight down, whereas SAR satellites cannot image straight down due to the overly strong radar reflection from the nadir (the point on the ground directly underneath the satellite). Instead, SAR satellites are typically "side-looking", meaning that they image at an angle to the side within a certain range of "look angles", as described in more detail below with reference to FIG. 18. The look angle can for example be from 15 degrees to 45 degrees. The look angle can be looking to the left or the right (some SAR satellites can be rotated to do either). Look angle and the direction (left or right) are parameters comprised within the imaging geometry. While this can increase the potential coverage of the SAR satellite compared to optical satellites that are constrained to pointing straight down, it also makes the scheduling of the satellites more complex and requires for example at least a different and more capable opportunity generator than what could be used for an optical satellite.

Different constraints may also factor into the scoring for SAR satellites as compared to optical satellites. Although SAR satellites have some advantages over optical satellites that simplify scheduling, for example being able image through clouds and during both day and night so that weather does not have to be taken into account, they have other constraints that can make it more complex to schedule. For example, due to the power requirements of sending and receiving SAR signals (particularly sending), the imaging time of small SAR satellites during a particular orbit can be limited, for example to 90 seconds or 120 seconds during a 90-minute orbit. These differences mean that prior art systems designed mainly for optical and other non-SAR satellites cannot automatically be applied to constellations of SAR satellites.

Referring first to FIG. 18, there is shown a system 100' for capturing synthetic aperture radar ("SAR") images. More particularly, FIG. 18 shows schematically how an aerial antenna 102' is used to capture SAR images. Antenna 102' may be satellite- or airplane-mounted, for example. Antenna 102' travels along a flight path 104', and directly below antenna 102' is the nadir 106'. Antenna 102' emits a radar signal 108' at a look angle 120' that illuminates a swath 110' on the ground, which is offset from nadir 106'. Antenna 102' measures the radial line of sight distance between antenna 102' and the surface along a slant range 122'. FIG. 18 also shows a range direction 112' and an azimuth direction 114', with range direction 112' extending perpendicularly away from flight path 104', and azimuth direction 114' extending parallel to flight path 104'. In respect of range direction 112', the swath 110' is between points along range direction 112' referred to as the near range 116' and the far range 118'.

Referring now to FIG. 14, there is depicted an example embodiment of a computer system 200 that may be used to perform a method for assigning tasks to a constellation of satellites, as described in further detail below. Computer system 200 comprises a processor 202 that controls computer system's 200 overall operation. Processor 202 is communicatively coupled to and controls several subsystems. These subsystems comprise an input/output ("I/O") controller 210, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. When the computer program code is executed by processor 202, processor 202 causes computer system 200 to implement a method assigning tasks to a constellation of satellites, such as described further below. Additionally or alternatively, multiple of computer systems 200 may be networked together and collectively perform that method using distributed computing.

Turning now to FIG. 1, there is illustrated a satellite 102 (such as a SAR satellite) in an orbit 104 around the Earth 106. The satellite's trajectory includes passing over a location 108 to be imaged by satellite 102 and a ground station 110 configured to communicate data to and from satellite 102. A new request to acquire an image of location 108 may be submitted to a ground station 110 after satellite 102 is launched. In this case, the tasking of the request must be communicated to satellite 102 via an uplink from Earth 106. FIG. 1 shows a single ground station 110. In a practical implementation, multiple ground stations are spread around Earth 106 and may be used by many customers to communicate with their satellites. Once a request to "book" time at a ground station is sent, the ground station crew will typically need time to queue up the required transmission for either uplinking or downlinking.

In an example, satellite 102 is orbiting Earth 106 in a low-earth orbit. A low-earth orbit can be from 160 km to 1000 km above the surface of Earth 106. Examples of Earth-monitoring satellites can have orbits of between 450 km and 650 km above Earth 106. In some embodiments, a satellite has an orbit that is approximately 550 km above Earth's surface. At an orbit of 550 km above Earth 106, for example, the satellite is effectively traversing the ground at about 7.5 km/s, or 27,000 km/h. Most satellites in this orbit will traverse Earth 106 at a speed that is in the range of 7-8 km/s.

In an example, satellite 102 uses synthetic aperture radar to image Earth 106 in all manner of conditions, including through cloud, fog, smoke, and at night. Satellite 102 can also use reflectors or phased-array antennas to help direct the synthetic aperture radar beam.

In the example of FIG. 1, the uplink to satellite 102 in low-earth orbit is provided by ground station 110. As satellite 102 moves along orbit 104 in the direction shown by arrow 112, it first passes over location 108 and then passes over ground station 110. As a result, in this example a new request uplinked at ground station 110 to satellite 102 to image location 108 cannot be carried out until the satellite's next pass over location 108. This builds a delay into the process.

When satellite 102 passes over ground station 110, the order is uplinked by being transmitted from ground station 110 to satellite 102. The next time satellite 102 passes over location 108, the image can be acquired.

There may be a considerable amount of time before satellite 102 next passes over location 108. When satellite 102 has completed a full orbit, Earth 106 will have rotated through a small angle so that satellite 102 will no long pass directly over location 108. Earth 106 may need to undergo several full rotations (taking several days) before satellite 102 passes over location 108 again and is able to acquire the requested image.

This can be readily appreciated from the coverage map illustrated in FIG. 2 which shows the coverage on Earth of a satellite path in 24 hours. Well under half the Earth is covered in 24 hours, indicating that it may take several days to provide a complete coverage and for satellite 102 of FIG. 1 to pass directly over location 108 again to acquire the requested image. This scenario can easily contribute around a week in the delay between submitting the new request and delivering the requested image.

In the example of FIG. 1, after eventually passing location 108 for a second time after the request was submitted, satellite 102 will shortly thereafter pass over ground station 110 to downlink the captured image. Once received by ground station 110, the image can be delivered to an end user and/or processed to extract other usable information such as land monitoring parameters for delivery to the end user.

As a result of the time lag of up to a week or more that can occur between request submission and delivery, Earth observation satellites are typically not used for applications that require faster response times such as hours or minutes. Instead, it is typical for Earth observation missions to be predefined before launch to provide specific images of predetermined events or to provide continuous known performance such as regular monitoring of known locations that can be scheduled in advance.

If it is attempted to add an additional task to a pre-existing schedule after launch, the additional task will be subject to the possible delays described above of up to a week, and furthermore it may be necessary to fit the task into gaps in the existing schedule which is likely not only to exacerbate delays but also to result in an inefficient use of overall resources in the mission.

Using another approach, it is possible to improve delivery times for new tasks and to use resources more efficiently. Referring to FIG. 3, a system for managing a constellation of satellites includes a schedule calculation module 302 for calculating a schedule for a constellation of satellites to execute tasks. Schedule calculation module 302 may be provided in a satellite operator application programming interface (API) 304 that is configured to communicate with a network of ground stations 306 and an end user 308. Ground stations 306 provide uplinks and downlinks to communicate to and from satellite 310 of the set. A representative satellite 310 of the set is shown in FIG. 3. Other satellites of the set are not shown in this figure but the set may include several or more satellites 310, each of which is configured to communicate with ground stations 306.

Schedule calculation module 302 may be comprised in a single computing system or may be distributed across multiple computing systems across multiple locations. For example, schedule calculation module 302 may be located at a ground station, or at another location in communication with multiple ground stations.

By using a constellation of satellites, for example a constellation of 18 satellites, the overall coverage of Earth by the set in a given time period is improved. Consequently, the delays caused by waiting for a satellite to pass over a location to be imaged are reduced.

This can be appreciated by referring to the maps shown in FIGS. 4 and 5. FIG. 4 shows a map of the coverage on Earth of 18 satellite paths in 3 hours, and FIG. 5 shows the coverage on Earth of the same 18 satellites in 24 hours. Substantially complete coverage of the Earth is achieved in 24 hours, unlike the situation with a single Earth observation satellite shown in FIG. 2.

The larger the number of satellites in the satellite constellation, the better the overall coverage of Earth by the satellite constellation in a given time period (e.g. reduced time between successive images of the same area or feature on Earth). For example, having two or more satellites will already provide significantly increased coverage compared to having only one satellite in the constellation. Three or more satellites would provide even better coverage, as would five or more satellites, or twelve or more satellites. Eighteen or more satellites as described in this example provide exceptional coverage. Even a satellite constellation with five or more satellites can achieve repeat times (time between possible successive images of one area or feature on Earth) previously unheard of in Earth monitoring.

However, as the number of satellites in the satellite constellation increases, the complexity of scheduling, optimizing, and tasking all of the satellites to carry out, post-launch, their assigned tasks increases exponentially. According to embodiments of the disclosure, and in order to efficiently deal with such an ever-increasing demand on the satellite constellation, schedule calculation module 302 and supporting databases may be used to handle these complex processing and tasking activities.

In particular, schedule calculation module 302 shown in FIG. 3 actively manages the tasking of the launched satellites 310 as new tasks are received. When a new task is received, a schedule of the entire constellation of satellites is recalculated so that the overall tasking can be kept efficient while incorporating the new task with an acceptable delivery time. This approach may enable turn-around times of a few hours or less for tasks submitted post-launch.

Schedule calculation module 302 is shown in FIG. 6 in relation to a new task or order 602, a satellite database 604, a channel database 606, and a new schedule 608. Schedule calculation module 302, satellite database 604, and channel database 606 may form part of a ground control station or satellite operator API, and together function to calculate a new schedule 608 every time a new order 602 is received. Schedule calculation module 302 is configured to recalculate the schedule using data from satellite database 604 and channel database 606 which store data such as satellite paths, satellite availability, ground station locations and availability, and available communication channels between the satellites and the ground stations. Details of these data and how they are used are described below.

Referring to FIG. 7, a new order 602 generally defines one or more geographical locations to be imaged and a time requirement for when the one or more images are to be acquired. The time requirement may, for example, be that the images are required immediately or as soon as possible, or may comprise one or more periods of time in the future during which images should be taken. Typical requests may require that images be taken at regular time intervals, for example daily. Other acquisition parameters may also be stipulated in a given request. For example, a customer may wish to specify the mode of acquisition such as 'spotlight' or 'stripmap' - these give trade-offs between resolution and area coverage (spotlight providing a higher resolution at the expense of smaller area coverage, and stripmap the reverse). This may depend on any desired further processing that the customer would wish to perform with an image (for example, object classification, change detection, etc.). As such, referring to FIG. 7, new order 602 may comprise an indication of a location 702, a time constraint 704, and any other acquisition parameters 706.

Every time a new order 602 is received, schedule calculation module 302 calculates an updated schedule for the satellites that includes imaging the one or more locations defined in new order 602. in order to achieve this, schedule calculation module may comprise, as shown in FIG. 8A, a simulation module 802 configured to determine options for how the schedule can be updated to accommodate new order 602, and an optimisation module 804 configured to determine a suitable updated schedule based on the available options.

Simulation module 802 comprises a satellite identifier 806 configured to identify satellites that, based on their orbital positions and projected paths, can acquire the requested images. The requested images include the ones that have been requested in new order 602 as well as the ones that have been requested in previous orders and have not yet been acquired. The satellites that can acquire the images are those whose paths take them over the requested locations in accordance with the time constraints specified in the requests.

In order to identify which satellites can execute which requests, satellite identifier 806 may be configured to execute a simulation of the satellite paths to determine which satellites will next be passing over the relevant geographical locations. It will be appreciated that an arbitrary acquisition may not be executed perfectly, and that satellite identifier 806 is therefore looking for satellites that would be able to match an arbitrary request to a location within a reasonable threshold of the specified time constraints while also maintaining the other acquisition parameters as well as possible.

Referring to FIG. 8B, satellite identifier 806 may generate a table of acquisition opportunities for acquiring an image of a location such as Tokyo. In a first example scenario, there is one imaging satellite and satellite identifier 806 generates a first table 810 detailing the possible opportunities to acquire an image of Tokyo using the one satellite during a three-day period. In a second example scenario, there are eighteen satellites and satellite identifier 806 generates a second table 812 detailing the possible opportunities to acquire an image of Tokyo using one or more of the eighteen satellites during a three-day period.

As shown, first table 810 has two rows, each representing an opportunity to acquire an image of Tokyo during the three days. There are two opportunities because, although there is only one satellite, it passes over Tokyo twice during the three days. Details of each acquisition opportunity are provided in the respective rows of table 810. In a first column 'Anx' 814, a coordinated universal time, also known as a universal time coordinated and abbreviated as UTC, is indicated. This provides a timestamp of the acquisition showing the date and time the image would be acquired. A second column 'AreaCovered' 816 indicates the percentage of the requested area that would be imaged in that acquisition. In a third column 'Duration' 818, a duration in seconds is indicated showing how long the satellite's imaging instrument would be activated in order to capture the image. This is ten seconds in this example. A fourth column 'End' 820 indicates the date and time when the imaging instrument would complete the imaging - the end of the ten-second period. In a fifth column 'IntersectionArea' 822, the overlap in square kilometres between the requested area to be imaged and the actual area that would be imaged is indicated. A sixth column 'Length' 824 indicates the distance as projected onto the ground that the satellite would cover during the ten-second imaging operation. In a seventh column 'LookAngle' 826, a tilt of the imaging instrument or the entire satellite on a roll axis is indicated in degrees. An eighth column 'Pass' 828 indicates whether the imaging satellite would be travelling towards the north pole (ascending) or towards the south pole (descending) as projected onto the Earth's surface when the imaging would take place. In a ninth column 'Satellite' 830, the identity of the satellite is indicated. In the scenario of table 810, there is only one satellite and so both rows indicate the same satellite. Finally, a tenth column 'Sensor' 832 indicates whether the satellite is looking to the left or the right, as defined relative to its direction of travel, for example in the case of a SAR satellite. This can be done with separate instruments, or it can be done by rotating the entire satellite to aim the imaging apparatus or the SAR antenna to the left or right side.

The table 812 relating to the second example scenario has similar columns and shows acquisition opportunities using one or more of eighteen satellites in a 3-day period. There are fifteen rows, representing fifteen acquisition opportunities during the three days. As shown in the ninth column 'Satellite', some rows indicate the same satellite, showing that some satellites pass over Tokyo more than once during the three days. For example, the second and third rows both relate to image acquisition by the satellite 'SAT-BLOCK1.2.2'. In total, in the three days, ten of the eighteen satellites pass over Tokyo once or more, providing the fifteen acquisition opportunities shown in table 812.

Returning to FIG. 8A, simulation module 802 also comprises an execution set identifier 808 configured to identify ground stations to complete the request. Ground stations are required to uplink new schedules to the satellites and to downlink image data or data derived from the images from the satellites. Thus, for each image to be acquired, execution set identifier 808 is configured to identify one or more execution sets, each execution set comprising a satellite, a ground station that can provide an uplink, and a ground station that can provide a downlink. By identifying the execution sets, simulation module 802 generates a set of options of how the requests can be executed. For example, in the case of table 810 of FIG. 8B, each row representing a potential acquisition may be associated with five ground stations providing uplink options in the 90 minutes before acquisition and five ground stations providing downlink options in the 90 minutes after acquisition. As a result, for each possible acquisition (i.e. for each row in the table 810), there may be 5x5=25 execution sets. Since there are two potential acquisitions, there could be 2x25=50 possible execution sets to acquire an image of Tokyo in this scenario. In general, a suitable execution set for each image to be acquired needs to be selected from among the available options. For example, a suitable selection of execution sets may provide efficient use of resources across the satellites and ground stations, and may also result in execution of the new request within an acceptable delivery time.

In order to make a suitable selection of execution sets, schedule calculation module 302 comprises an optimisation module 804 configured to determine an optimised set of execution sets. Optimisation module 804 attempts to match the requests to the execution capabilities that are available, and may be configured to optimise for delivery time, efficient use of satellite and ground station resources, and cost-effectiveness. Details of optimisation module 804 are described in further detail below, with reference to FIGS. 15-18.

In order to identify satellites and execution sets, simulation module 802 is communicatively connected to a satellite database 604 and a channel database 606. As shown in FIG. 9, satellite database 604 stores satellite data such as satellite orbits 902, satellite resources 904 such as power 906, momentum 908 and memory 910, available capacity 912 including data on reductions in capacity due to satellite maintenance 914, satellite mandatory management manoeuvres 916 and satellite failures 918, and a previously uploaded schedule 920. In examples, satellite database 604, or another database that schedule calculation module 302 has access to, may store business rules that may also be used to determine a new schedule.

As shown in FIG. 10, channel database 606 stores channel data (relating to communication channels to and from satellites) such as ground station data 1002 including available passes 1004, for example passes when the ground station has capacity to up/downlink or some other measure of availability, required booking times 1006, for example minimum time between booking the ground station and up/downlinking or some other measure of booking time, and pricing 1008, available space-to-space communication links 1010, and available laser downlinks 1012. Space-to-space communication links 1010 may be provided by other satellites such as geostationary satellites or other spacecraft.

Simulation module 802 of schedule calculation module 302 uses data in satellite database 604 and channel database 606 to determine the execution sets that can be used to acquire images.

Referring to FIG. 11, when a schedule has been calculated, schedule information is uploaded to the set of satellites to instruct them to acquire and downlink image data. In an embodiment, the schedule information comprises an acquisition command 1102 providing details of when and how to perform the imaging operation, and a downlink command 1104 comprising details of when and how to downlink the acquired data. There is no uplink command because it will be appreciated that the satellite is configured to receive an uplinked signal without being commanded to do so.

Acquisition command 1102 may comprise an indication 1106 of the time the image is to be acquired, an indication 1108 of the angle of the imaging instrument on a roll axis, an indication 1110 of whether a left or right sensor is to be used for the imaging, an indication of a duration 1112 of the imaging operation (for example, ten seconds as in the example above), and an indication 1114 of an image tag. An image tag provides an identifier such as a name or alphanumerical identifier for the image so that it can be identified easily when it is to be downlinked.

Downlink command 1104 may comprise an indication 1116 of the time of the downlink, an indication 1118 of the identity or location of the ground station to which the image is to be downlinked, and an indication 1120 of the image tag. This facilitates the process of identifying the correct image at the scheduled time of the downlink.

Referring to FIG. 12, a method 1200 of assigning tasks to a constellation of satellites comprises receiving 1202 a new order, recalculating 1204 a schedule 1204, and uploading 1206 the new schedule to the satellites. Method 1200 may be suitably performed by a combination of a satellite operator API and a ground station providing an uplink to a satellite.

FIG. 13 shows a worked example 1300 of how a satellite operator can manage a constellation of satellites using the apparatus of FIGS. 6, 8, 9 and 10. in order to recalculate the schedule of satellite tasks each time a new order is submitted, schedule calculation module 302 may require up-to-date information on available resources. These include data on the satellites and data on the ground stations so that execution sets can be identified and selected from. As such, the data stored in satellite database 604 and channel database 606 are kept up-to-date. Satellite data, such as orbits 902, power 906, and momentum 908 are within the satellite operator's control and known to the satellite operator. As a result, this data can be kept up-to-date by the satellite operator without any reliance on external providers. However, if the satellite operator uses an external ground station provider, then ground station data 1002 stored in channel database 606 has to be regularly sourced from the ground station provider to keep this information up-to-date. As such, the worked example includes the step of requesting 1302 ground station availability from a ground station provider.

Schedule calculation module 302 receives a new order 602 at step 1303. At this stage, ways in which the pending orders can be executed need to be identified. The pending orders comprise both the new order and any previously received orders that are still to be executed. In the case that there are no previous orders waiting to be executed, the schedule recalculation step is the same and simply comprises calculating a new schedule. Each order may contain the same parameters and resource allocation. In order to identify possible ways to execute the pending orders, schedule calculation module 302 recalculates possible execution sets for each order at step 1304. This creates options from which a new execution set for each pending order can be selected. The schedule is then recalculated at step 1306 by selecting a suitable execution set for each order and generating a new schedule for the satellites on the basis of the selected execution sets. Execution sets may be selected on the basis of meeting optimisation goals such as minimising delivery time, minimising a difference between a requested image acquisition time and an actual image acquisition time, maximising efficiency of use of resources across the satellites, and minimising cost. A table of resource allocation may be updated at this stage. The resource allocation table may contain information relevant to a particular implementation and may include any one or more of:

- Which satellite would be performing the order;
- Storage available on the satellite for imaging tasks;
- The amount of time a satellite is imaging (executing orders) in a particular orbit (this being limited by power availability (battery capacity) and thermal parameters); and
- Which downlink pass over a ground station would be used to transfer the image.

In order to implement the new schedule, ground station bookings are updated at step 1308 to match the new execution sets and provide the uplinks and downlinks that are required by the new schedule. This may involve requesting new bookings and cancelling redundant ones, and may require communicating with the ground station provider to change the booking. The new schedule is uploaded to the satellites at step 1310, or at least to affected satellites that are tasked differently in the new schedule compared to the old schedule. The uploading is implemented using ground stations reserved in the updated ground station booking. At this stage, the ground stations and satellites are ready to execute the orders according to the new schedule, and the delivery parameters can be provided at step 1312 to the customer. Delivery parameters may comprise any one or more of: time of image acquisition; time of delivery; where the image will be sent to, such as the address of the customer's Secure File Transfer Protocol (SFTP) server, or if they will access it from services of the constellation operator; what level of processing the customer requires, e.g. Ground Range Detected (the image is registered to the globe) / Single Look Complex whereby the actual I/Q values of the reflected signal are supplied.

At step 1314 the new order is executed, involving acquiring the required image or images and downlinking the image data or suitable data derived from the images for delivery to the customer.

The schedule is recalculated every time a new order is received or another event that affects capacity to execute orders takes place. For example, events that would affect capacity to execute orders may include maintenance of a satellite or ground station, or failure of a satellite or ground station.

The present disclosure provides various advantages for assigning tasks to a constellation of satellites. From the point of view of the customer who submits a task, there is an improved turn-around time between submitting a task and receiving a requested satellite image. This means that urgent images can be acquired and delivered faster than using traditional methods. From the point of view of the satellite operator, since the schedule is recalculated each time a new task is received, the available satellites and their resources can be used more efficiently and more cost-effectively when new tasks arrive.

Some embodiments enable satellites with different capabilities to be easily accommodated, and a new schedule can be calculated to provide efficient use of satellite resources, taking into account the different capabilities of different satellites. Two main reasons for satellites having different capabilities include simple evolution, as satellites launched more recently will typically be 'better' with more storage, will have been made according to more robust manufacturing techniques, will have more sophisticated radios for both downlink and imaging, will have more accurate pointing systems, etc. Secondly, degradation in space - satellites are prone to high levels of solar / cosmic radiation which can damage subsystems which in turn can then limit their abilities to function. The distribution and timing of this across a network or constellation is effectively random. Further, different satellites may have different imaging capabilities, such as resolution capability, may use different wavelengths for imaging, or may have better processing and storage capability.

Ground stations and their resources may also be used more efficiently. The present approach is also less susceptible to failure because, in the event an asset such as a satellite or a ground station fails, the schedule may be recalculated and the pending tasks may be accommodated as efficiently as possible using the remaining assets and their resources. This is preferable to a failure of a satellite or ground station resulting in tasks not being able to be executed.

Turning now to FIGS. 15-18, there are described further embodiments of assigning tasks to a constellation of satellites. The methods described in these embodiments may be implemented using, for example, schedule calculation module 302 described above.

FIG. 15 is a flow diagram of a general method assigning tasks to a constellation of satellites.

At block 1502, schedule calculation module 302 is triggered. According to some embodiments, schedule calculation module 302 is automatically triggered according to one of two ways:

1. Periodically, according to a pre-set periodicity (such as every hour); and

2. Whenever a task's state is set "Active" (i.e. the task has been received and is ready to be acted upon).

As can be seen in FIG. 16, for each satellite, a "red zone" 1610 extends from the current point in time ("Now") to a pre-set, future point in time referred to as "N minutes" (N minutes from Now). "N minutes" is configurable and is based, for example, on the amount of time schedule calculation module 302 needs in order to perform its optimization. This period of time therefore represents a period of time during which there is insufficient time to optimize any tasks/activities that have already been scheduled for execution between Now and N minutes. Note that, for satellites 2 and 3, red zones 1610 extending between Now and N minutes encompass passes 1612. A pass corresponds to the satellite passing over a ground station and therefore being in a position to receive new scheduling instructions from the ground station.

Beyond N minutes, red zones 1610 extend to the end of the next pass 1615 that has been booked for the satellite in question. This period of time represents a period of time during which new scheduling instructions cannot be sent to the satellite until the satellite has completed its next pass over a ground station. Therefore, during this period of time, even if schedule calculation module 302 has completed its optimization, any new tasks/activities cannot be scheduled on the satellite until the satellite has completed its next pass.

Therefore, generally speaking, any tasks and/or activities scheduled to take place during a redzone 1610 may be considered "locked" and therefore are not taken into consideration by schedule calculation module 302 during its optimization process, as described in further detail below.

Once schedule calculation module 302 is activated, as described above, schedule calculation module 302 fetches any task that meets the following criteria:

- The task is in "active" state.
- The time window associated with the task (i.e. the time period during which the task must be completed) is not wholly located within each satellite's red zone 1610.
- There are no active image acquisition activities associated with the task that were not generated by schedule calculation module 302. For example, if the task is associated with one or more manually-entered image acquisition activities, then schedule calculation module 302 ignores the task.
- The task does not include any active image acquisition activities that are scheduled to occur before the run window of schedule calculation module 302. For example, referring to FIG. 16, schedule calculation module 302 will not fetch any task with an active image acquisition activity set to occur between "Now" and "N minutes", as well as between "N minutes" and the end of the next pass booked for a satellite, since such image acquisition activities are locked and are not modifiable by schedule calculation module 302.

At block 1504, schedule calculation module 302 collects one or more tasks that have been received (for example, from customers of the satellite constellation operator) and that have not yet been assigned to a satellite. For example, schedule calculation module 302 may access and retrieve tasks and activities that have been received and that are being stored in a database 1506. As described in further detail below, each task may be associated with one or more activities which may be generated in response to the scheduling of a task. Activities may also be prioritized based on one or more parameters of the task. For example, if a task requires that an image be taken within the next 72 hours, then multiple activities may be generated for the task, with each activity requiring that an attempt be made to capture the image every 24 hours, for example.

At block 1508, schedule calculation module 302 identifies tasks that have been locked (e.g. those that are located within red zones 1610 in FIG. 16) and those that are able to be rescheduled (e.g. those that are located outside of red zones 1610 in FIG. 16). Only those tasks that are still able to be rescheduled are then passed to block 1510 in the process.

At block 1510, based on the tasks that have been collected by schedule calculation module 302, schedule calculation module 302 identifies one or more opportunities. As described above, an opportunity represents a given satellite of the constellation potentially executing the task (e.g. in the case of image acquisition, potentially capturing the desired image or images of the geographical location). Details of how the opportunities are identified are discussed in further detail below.

In an embodiment, for each outstanding task that has been collected by schedule calculation module 302, the most up-to-date opportunities are generated at block 1510 . The parameters of some of these opportunities may have only changed a small amount (e.g. based on slight variations in orbits) when compared to corresponding opportunities generated by schedule calculation module 302 during previous runs.

In an alternative embodiment, a separate opportunity generator is run regularly outside of schedule calculation module 302 in order to generate opportunities for all active tasks. For example, it could be scheduled to run every hour, or every time new True Line Elements (TLEs) are received for the satellites. TLEs provide the most up-to-date information about the speed and direction of the satellites, and these updated orbits are taken into account in generating the opportunities, which may vary slightly from previous calculations. Once calculated, these opportunities are put into an opportunity cache, replacing previously calculated opportunities.

In this alternative embodiment that uses opportunity caching, when schedule calculation module 302 is triggered, for example by a new task, only opportunities for the new task need to be generated at block 1510. Opportunities for all other active tasks can be pulled from the opportunity cache. In this manner, significant processing time can be saved in running schedule calculation module 302, which may allow for a more optimum and timely scheduling of tasks.

Regardless of whether opportunities for all tasks are generated at block 1510 or opportunity caching is used for already existing tasks, a set of total opportunities (representing all the identified opportunities) is generated at block 1512 by schedule calculation module 302.

At block 1514, schedule calculation module 302 identifies and removes any opportunity that is deemed impossible. An impossible opportunity may be an opportunity that cannot be performed when account is taken of other pre-scheduled tasks or activities that a given satellite is scheduled to perform. For example, schedule calculation module 302 may determine that a given satellite is in principle capable of executing a task (within the constraints defined by the task) that has been retrieved at block 1504. However, schedule calculation module 302 may also determine that, when the given satellite will be in the position required to execute the task, the satellite has already been scheduled for maintenance work. Schedule calculation module 302 may therefore identify the corresponding opportunity as being an impossible opportunity, and the opportunity is therefore filtered out of the set of total opportunities. The filtering out of impossible opportunities may be based on data retrieved from a database 1516 of reservations, custom activities, and locked activities. Such data may be representative of scheduled tasks and activities that cannot be rescheduled and that may therefore prevent a given opportunity from actually being carried out by the corresponding satellite.

Other constraints that may result in an opportunity from the set of Total Opportunities being filtered out include a satellite being already scheduled to perform a task that was not fetched by schedule calculation module 302 at block 1504 (for example, a task that was generated by the satellite constellation operator as opposed to being received by a customer of the satellite constellation operator), as well as any pre-existing custom activities that have been reserved for the satellite and that overlap with the opportunity.

At block 1518, a set of possible opportunities (i.e. the opportunities that remain after filtering out impossible opportunities from the set of total opportunities) is generated by schedule calculation module 302.

At block 1520, as described above, optimization module 804 is used to optimize the various possible opportunities based on one or more constraints. At block 1522, the details of any locked activities (e.g. activities that are located within red zones 1610 in FIG. 16) are provided to optimization module 804 so that optimization module 804 may take into account such locked activities when performing the optimization process.

During the optimization process, a scheduling score (or simply "score) is calculated for each opportunity based on a number of parameters including task priority, opportunity scarcity, how many opportunities are ahead, the availability of future downlinks, and task seniority (these parameters are discussed in further detail below). During each iteration of the optimization process, schedule calculation module 302 is then configured to output a binary result (i.e. either the opportunity is selected, or the opportunity is not selected) and maximize the score. As also described in further detail below, during the optimization process, constraints are set to limit, for example, one opportunity per task, to prevent overlaps between opportunities corresponding the same satellite, and that the orbit limits would be respected given existing, locked imaging. According to some embodiments, linear programming tools, for example the Coin-or branch and cut (CBC) solver and Coin-OR's PuLP library, can be used to solve the optimization problem.

At block 1524, based on the results of the optimization process, optimization module 804 outputs a set of selected opportunities that represent the assignment of each task to a corresponding satellite of the constellation.

At block 1526, based on the selected opportunities, schedule calculation module 302 then synchronizes with existing activities in database 1528. For example, if an existing activity in database 1528 is sufficiently similar to a selected opportunity (e.g. if both the selected opportunity and the imaging activity correspond to the same satellite and to a task that involves imaging the same or similar AoI at the same or similar (e.g. +/- 30s) point in time), then the activity is kept unchanged and the opportunity may be deleted. Otherwise, schedule calculation module 302 cancels any active imaging activities scheduled for satellites corresponding to the selected opportunities and that would overlap with the constraints defined in the opportunities. Schedule calculation module 302 then generates new activities based on the selected opportunities, and the activities are uplinked to their assigned satellites. When a new activity is created, it may be cross-checked against orbit limits and for any other potential conflicts. For example, schedule calculation module 302 may check to see whether the associated task was cancelled during the optimization process, in which case the activity can be deleted.

At block 1530, the assignment of the received tasks is completed and schedule calculation module 302 awaits being triggered again at block 1502.

Turning to FIG. 17, there will now be described an example method of processing tasks. The purpose of the method shown in FIG. 17 is to prevent two or more instances of the optimization process running in parallel. Generally speaking, while schedule calculation module 302 is optimizing a set of tasks, this is achieved by preventing any new tasks that are received in the meantime from being included in the optimization. The method in FIG. 17 may be executed periodically (for example every hour) and in response to a new task received.

Starting at block 1710, the states of a LOCK flag and a QUEUE flag are checked.

At block 1712, the status of the LOCK flag is determined to be either locked (i.e. schedule calculation module 302 is currently running) or unlocked (i.e. schedule calculation module 302 is currently idle).

If the status of the LOCK flag is determined to be locked, then for the time being any queued tasks cannot be processed.

Therefore, at block 1714, the QUEUE flag is set to "requested", and at block 1716 any newly received task is queued.

If the status of the LOCK flag is determined to be unlocked, then schedule calculation module 302 is available to process any queued tasks.

Therefore, at block 1718, the LOCK flag is set to "running", the QUEUE flag is cleared, and at block 120 any queued tasks are fetched by schedule calculation module 302 and are processed in the manner described in more detail below.

At block 1722, if an error occurs during the processing of the tasks, then the LOCK flag is set to "idle", and at block 1724 the process returns to block 1710.

At block 1728, the status of the QUEUE flag is determined.

If the QUEUE flag indicates that there are other tasks in the queue, then the process returns to block 1710.

If the QUEUE flag indicates that there are no other tasks in the queue, then at block 1730 the process ends.

The functionality of optimization module 804 will now be described in more detail.

During the optimization process, and at the end of each iteration of the process, the decision of optimization module 804 to keep one opportunity and not another opportunity is based on the resolution of the optimization problem. Solving the optimization problem relies on identifying the maximum or minimum of a function. Optimization module 804 assigns each opportunity a score or heuristic based on a number of different factors. This initial score is then updated during the optimization process. Once the optimization problem has been solved, the resulting scores rank the various opportunities. According to some embodiments, the optimization problem is configured such that the aim is to obtain the highest "total score" which is the sum of the score assigned to each opportunity input to optimization module 804.

In the following:

- "opps_ids" is a list of the IDs of the opportunities input to optimization module 804;
- "score" is a vector mapping an opportunity to its scheduling_score; and
- "opps_chosen" is a vector of variables that can be 0 or 1:
    - opps_chosen[id] set to 1 means that the opportunity corresponding to [id] has been chosen; and

◦ opps_chosen[id] set to 0 means that the opportunity corresponding to [id] has not been chosen.

The expression of the score is therefore:
sum(opps_chosen[id]*score[id] for id in opps_ids)

With the optimization problem expressed as such, it is already possible to algorithmically solve the problem via linear optimization. If that was all, then naturally setting opps_chosen[id] = 1 for all id in opps_ids is the solution that maximizes the score, meaning that all opportunities would be selected. in theory this would make sense since all tasks want to be executed (e.g. all image acquisition requests want to be competed). However, in practice a number of constraints make this impossible. These constrains need to be converted into mathematical expressions in order to properly express the optimization problem.

The constraints include the following:

1. **Any two images** cannot be taken at the same time, and in particular any two acquisitions need to be **separated by a minimum amount of time.** Two opportunities that are too close in time are said to be "conflicting".
2. The duration of any single image cannot extend beyond a certain maximum duration.
3. In any single orbit of the satellite, a certain maximum number of images can be taken.
4. The total time spent imaging during a given orbit (this will depend on the total number of images that are requested during the orbit).
5. **Only one opportunity** can be picked **for any given task.**

Constraint 1

In order to mathematically express a constraint, the expression should be formulated on the components of the vector opps_chosen. Let us assume that i and j are two opportunities that are conflicting. We want optimization module 804 to select only one of them. One way to express this is by using:

$$\text{opps_chosen}[i] + \text{opps_chosen}[j] <= 1$$

Therefore, opps_chosen[i] and opps_chosen[i] cannot both be equal to 1 since the sum would be 2 and that would violate the constraint. In this case, either opportunity, or neither opportunity, is selected (but not both).

Constraint 2

Let opp_1, opp_2, ... opp_n be the opportunities that can fulfil a given task. The constraint can be expressed as:

$$\text{sum(opps_chosen[opp_i] for i in[|1...n|])} <= 1$$

This constraint needs to be used for every task considered by optimization module 804.

Constraint 3

Introducing Nmax as the maximum number images that can be taken per orbit, let opp_1, opp_2, ... opp_n be a family of opportunities that are in the same orbit. This gives the constraint:

$$\text{sum(opps_chosen[opp_i]} \sim \text{i)} <= \text{Nmax}$$

~i: for i in[|1...n|]

This needs to be repeated for every orbit of every satellite. Nmax may be different for different satellites.

Constraint 4

For this constraint, instead of using a mathematical expression, it is simplest to remove any opportunity whose imaging duration would be exceeded if it were to execute the task.

Constraint 5

Since the total time spent imaging during a given orbit depends on the total number of images that are requested during the orbit, max_duration is introduced to represent the maximum image duration allowed per number of images. For example, max_duration[3] == 95 s means that the maximum total duration for three images taken in one orbit is 95 seconds. For example, 30 s + 30 s + 30 s would work, while 40 s + 30 s + 30 s would not. If four images are desired, then the total imaging duration must not exceed max_duration[4], etc.

While one may be inclined to express the constraint as follows,

sum(duration[opp_i] x opps_chosen[opp_i] ~i) <= max_duration(sum(opps_chosen[opp_i] ~i),

this is not a valid expression for a basic linear optimization problem, since the right-hand side cannot be a function of the variables.

Another option would be to reformulate the expression in a way that is similar to the previous constraint and to consider all the possible combinations of 1, 2, ..., Nmax opportunities while adding an additional constraint for that set.

Let k be a number in [|1...Nmax|], and opp_i for i in [|1...k|] be a family of k opportunities in a given orbit (among all the opportunities for that orbit). The constraint would then be:

sum(duration[opp_i] x opps_chosen[opp_i] for i in [|1..k|]) <= max_duration(k)

Let's assume that we are considering 10 opportunities and that Nmax is 5. First, all the constraints for all the sets of 2 opportunities that would become images would be added which is 10x9=90 pairs. Then, all the constraints for all the sets of 3 opportunities that would become images would be added which is 10x9x8=720 3-uples. Then, all the constraints for all the sets of 4 opportunities that would become images would be added which is 10x9x8x7=5040 4-uples. Then, all the constraints for all the sets of 5 opportunities that would become images would be added which is $10 \times 9 \times 8 \times 7 \times 6 = 30240$ 5-uples.

As one sees, while the number in this example is still relatively low, with Nmax = 7 and 20 opportunities an additional 400 million constraints need to be added for that orbit alone. A different approach may therefore be required.

According to a different approach, Nmax constraints are added to each orbit:

sum(duration[opp_i] x opps_chosen[opp_i] ~i) <= max_duration(2)

sum(duration[opp_i] x opps_chosen[opp_i] ~i) <= max_duration(3)

…

sum(duration[opp_i] x opps_chosen[opp_i] ~i) <= max_duration(Nmax)

An issue here is that the problem may be over-constrained. Ideally, a single constraint should be selected based on a predefined condition.

To do so, an extra set of variables is used. A family of variables (per orbit) is introduced for k in [|1...Nmax|]:

is_equal_to[k] = 1 if sum(opps_chosen[opp_i] ~i) == k else 0

Such a family of variables may then be plugged into the constraints above:

sum(duration[opp_i] x opps_chosen[opp_i] ~i) <= max_duration(2) + M x (1 - is_equal_to[2])

sum(duration[opp_i] x opps_chosen[opp_i] ~i) <= max_duration(3) + M x (1 - is_equal_to[3])

…

sum(duration[opp_i] x opps_chosen[opp_i] ~i) <= max_duration(Nmax) + M x (1-is_equal_to[Nmax])

with M being a large number so that if (1 - is_equal_to[k]) = 1 then the constraint is essentially useless.

However, this expression is also not linear-optimization compatible.

Therefore, two other families of variables are introduced to replace is_equal_to. For k in [|1...Nmax|]:

is_more_than[k] = 1 if sum(opps_chosen[opp_i] ~i) >= k else 0

$$is_less_than[k] = 1 \text{ if } sum(opps_chosen[opp_i] \sim i) <= k \text{ else } 0$$

This is also not linear-optimization compatible, but the expression can be converted as follows. For k in [|1...Nmax|]:

$$is_more_than[k] >= (sum(opps_chosen[opp_i] \sim i) - k)/ Nmax + 0.0001$$

$$is_more_than[k] <= (sum(opps_chosen[opp_i] \sim i) - k)/ Nmax + 1.0001$$

Similarly:

$$is_less_than[k] >= (k - sum(opps_chosen[opp_i] \sim i))/ Nmax + 0.0001$$

$$is_less_than[k] <= (k - sum(opps_chosen[opp_i] \sim i))/ Nmax + 1.0001$$

*The "0.001" are used to avoid using strict non-equivalence that a linear optimization solver typically has trouble handling.*

As can be seen, for Constraint 5, 2 * Nmax more variables were introduced, 4 * Nmax constraints were introduced for these variables, and Nmax constraints were introduced strictly for expressing the total imaging duration limit per orbit.

As explained above, optimization module 804 assigns a score or heuristic to each opportunity, based on a number of different factors. This initial score is then updated during the optimization process. Once the optimization problem has been solved (based on the above constraints), the resulting scores rank the various opportunities. In short, if two opportunities are in conflict, optimization module 804 will choose the opportunity with the higher score.

According to some embodiments, the score of an opportunity takes into account four parameters, ordered by importance as follows:

1. **Task priority.** This can be broken down into:

   **a. Task tier,** which is the number of hundreds in the task priority; i.e. priority 300 and 320 are tier-3 priorities

   **b. Inter-tier task priority,** which is the priority stripped from the task tier; i.e. priority 320 is inter-tier task priority 20

2. **The seniority of a task,** or how old the task is. In case the scores for two different opportunities are determined to be equal based on consideration 1 above, then the opportunity associated with the older task (i.e. the task with the greater seniority) will win the tie-break. The task's seniority may be determined using the task ID since IDs are generated based on the order of creation of tasks. In other words, a lower task ID means a higher seniority.

3. **The time distance from now until the opportunity,** which may be referred to in code as "opps ahead". This score may be used to prioritize one or more opportunities from among a set of opportunities associated with a common task.

The score is based on the above three parameters which are combined to produce a single score. In particular, according to some embodiments, parameter 1 is weighted more heavily than parameter 2 which is weighted more heavily than parameter 3. As an example, a higher score will be generated for an opportunity A for a task having a task priority of 300 and an ID of 100, than for an opportunity B for a task having a task priority of 199 and an ID of 1 (since the task priority for opportunity A is higher than that of opportunity B).

According to some embodiments, each parameter is evaluated and normalized between 0 and 99 and then concatenated. Taking the above example, the scores for opportunities A and B would be generated as follows:

- Opportunity A: Tier 3. extra 0. trimmed priority 00. scarcity 10. opps ahead 99. seniority 01 → 3000109901
- Opportunity B: Tier 1. extra 0. trimmed priority 99. scarcity 99. opps ahead 99. seniority 99 → 1099999999

Since the score of 3000109901 is higher than the score of 1099999999, opportunity A would win in case of a conflict.

The parameters do not necessarily have to be ordered and weighted in the way described above. The parameters can be ordered or weighted differently depending on the situation. For example, if the priority of the constellation operator is to try to get as many of the tasks completed as possible rather than just ensuring that prioritized tasks are dealt with first, then the seniority of the task may become the most important parameter and will be weighted more heavily as a result.

In some embodiments, other parameters may be included and some of the above parameters excluded from the calculation of the score. In an example, a parameter related to future downlink availability can also be included in the scoring, or can replace one of the existing parameters (e.g., the seniority of the task) in the scoring. In an embodiment, the future downlink availability can comprise how long it takes to downlink the relevant data after the task has been performed.

Often, as in the case of SAR imaging, the task of imaging does not become useful until the raw data is downloaded from the satellite and processed into an image. This can happen on the satellite but more typically this is done on Earth after the data is downlinked. Traditionally, due to the low numbers of SAR satellites in orbit and SAR constellations that only included at most three satellites, repeat times (the amount of time between successive imaging tasks of a particular area of interest) could be on the order of weeks or even months. As such, SAR was used for tasks such as mapping or for looking at changes that occur over a long period of time, and relative to this the time taken to downlink the image was not very important.

More recently, with the advent of larger constellations of SAR satellites, particularly constellations of micro SAR satellites each with a mass of between approximately 100 to 500 kg, satellites are able to return to the same location above the Earth more frequently, for example once per day, once per 12 hours, once per 6 hours, or even more frequently. Such improvements allow for tracking of more dynamic scenes and objects, for which the time between taking the image and the time for downlinking to image data the ground becomes more important. For example, when identifying and locating a moving object such as a ship, downlink availability becomes very important. The longer the time between acquiring the image and downlinking the image to the ground, the less accurate (and hence less valuable) that data becomes. Hence, opportunities with a short duration of time between image acquisition and downlinking the image may be scored more highly, possibly even over images than can be taken sooner but that would have to wait a longer time prior to downlink. Counter-intuitively, a later imaging opportunity may be preferred over an earlier imaging opportunity if a downlink can occur immediately after image acquisition. In these cases, scheduling systems that prioritize opportunities based only on the time distance between now and the opportunity would not arrive at an optimum result. Scheduling systems that take into account future downlink availability can help to solve this problem. In some cases, if the time between acquiring the image and downlinking the image becomes too long, the value of the image may fall to zero and the downlinking may not even occur if there are other higher-scoring opportunities to put in the schedule.

The above describes embodiments using linear programming techniques to optimize the scheduling by formulating the constraints of the satellite problem, and in particular the constraints related to small SAR satellites, in a way that can be used in linear programming.

In another embodiment, a constraint programming or constraint optimization approach can be used instead of linear programming or in combination with linear programming to optimize the schedule for a constellation of satellites. Constraint programming can be used to identify feasible solutions when there are a many possible solutions. In constraint programming, arbitrary constraints can be used and do not necessarily need to be formulated into linear constraints.

According to some embodiments, an alternative method of assigning tasks to the constellation of satellites may be employed, as described in further detail below. The method described below may additionally include any of the steps and/or operations described above and may be implemented using any of the herein-described computer systems and hardware.

According to this alternative method, tasks may be assigned to satellites in a more "greedy" fashion, for example with more emphasis on getting the most important tasks done first and less emphasis on optimizing the capacity of the satellite constellation. According to some embodiments, higher-priority tasks take precedence over lower-priority tasks, and older tasks take precedence over younger tasks (i.e., tasks that have been received by the system for a longer period of time are considered more urgent than tasks that were more recently received). According to this alternative method, all available opportunities are generated for all received tasks, and the opportunities are then ranked based on the priority of each task associated with each opportunity. For opportunities of tasks having the same priority, an older task is considered higher priority than a younger task, and so its opportunities will accordingly be ranked higher. In other words, a task's age may act as the deciding factor in a tie-break between tasks having the same priority.

After ranking the opportunities according to task priority, for each task, the opportunities are ranked according to the estimated time it will take before the satellite associated with the opportunity can start performing the task. In particular, opportunities that would result in the task being performed earlier are ranked higher than opportunities that would result in the task being performed later. According to some embodiments, if the task relates to image acquisition, then performing the task may comprise initiating the image capture (but not necessarily completing the image capture). In other words, according to some embodiments, opportunities that would result in an image capture commencing sooner are ranked higher than opportunities that would result in the image capture commencing later.

Generally, the ranking described above is akin to attributing a scheduling or other score to each opportunity, with higher-ranked opportunities being given a higher "score" than lower-ranking opportunities.

After ranking all opportunities as described above, then, for each task, the highest-ranked opportunity is selected. Before selecting a given opportunity, a number of checks are performed to ensure that the selection of the opportunity does not conflict with any conflict conditions, as described in further detail below. For example, the selection of an opportunity must not conflict with any higher-ranked opportunity that has already been selected. For example, the selection of a first opportunity may conflict with a higher-ranked already-selected opportunity if, in response to selecting the first opportunity, the satellite of the higher-ranked already-selected opportunity would no longer be able to perform the task associated with the higher-ranked already-selected opportunity. Performance or execution of a task may include both completing the task (e.g., capturing an image) and, in the case of performing an image acquisition, downlinking the image data within a certain, pre-set time period.

Advantages of this method include the fact that the computational burden associated with executing optimization routines on relatively large numbers of tasks may be avoided. Although it is possible that with this method a fewer overall number of tasks may be completed in a given amount of time, fewer computer resources may be expended in order to assign the tasks to the satellite constellation, while ensuring that higher-priority tasks and older tasks are prioritized over lower-priority tasks and younger tasks.

Turning to FIG. 19, there is shown a flow diagram of a method of performing task allocation according to this alternative method.

Starting at block 1902, all opportunities are generated for all tasks. In particular, for each task, each possible opportunity is generated, and this process is repeated for each task, resulting in list of opportunities. To determine whether an opportunity is considered "possible", a number of filters may be applied. For example, an opportunity may be considered "possible" and may be generated if the satellite associated with the opportunity would be able to meet the service level agreement for the customer, as defined by the task. For example, the satellite would have to be able to complete the task within an agreed time frame. If not, then the opportunity is not generated.

According to some embodiments, additional filters may be used when generating the opportunities. For example, the user may specify a set of satellites by which the task must be fulfilled, and the opportunities may be correspondingly filtered. Furthermore, the opportunities may be filtered based on an imaging mode requirement associated with the task. The user can also select a pass direction (ascending/descending/both), a look direction (left/right/both), and/or limit the incidence angle to a certain range - all of these parameters would correspondingly filter out opportunities that do not match the constraints. Furthermore, opportunities may be filtered out by applying one or more time limits. For example, if a given opportunity does not allow for the corresponding task to be completed by a certain date and time, or if the opportunity simply does not fall within a fixed period of time from the present, for example within the next 30 days, then the opportunity may not be considered "possible" and may be ignored.

At block 1903, all available downlinking passes (whether previously booked or not booked) between the current time and a future time are obtained. For example, the period of time within which all available downlinking passes are obtained may be the same time period used for generating the opportunities (e.g., within the next 30 days). A downlinking pass, or simply "pass", represents a period of time during which the satellite associated with the opportunity will be able to perform downlinking to a ground station. For example, a SAR satellite may be tasked to collect SAR data which must then be transmitted to the ground using a ground station such that the data can then be processed on the ground to form an image.

The list of passes may be obtained from a separate service that calculates and maintains the pass schedule. At block 1903, passes that are too short (e.g., 1 - 3 minutes in duration) may be removed from the list of available passes. Such short passes can occur if, for example, the ground station only passes within the extreme transmission range of the satellite. This can occur if the ground station is located a significant distance from directly underneath the orbital track of the satellite. Due to the distance between the satellite and the ground station, such a pass may not have a strong enough connection to reliably allow for downlinking of the data. In particular, task data files containing SAR data to be processed into an image on the ground can be quite large. However, short passes may be still sufficient to allow for other tasks such as uploading instructions to the satellite or downloading small amounts of telemetry information. At block 1903, the passes may also be converted or reorganized to make it easier to use the pass information for subsequent stages of the process. For example, the passes may be divided into separate lists, with each list representing all the available booked and not-booked passes for a particular satellite in the constellation.

At block 1904, the generated opportunities are ranked. The opportunities are first ranked based on the priority of the task (or "task priority) associated with each opportunity. Therefore, the opportunities associated with higher-priority tasks are ranked higher than the opportunities associated with lower-priority tasks. For tasks having the same priority, the opportunities associated with an older task are ranked higher than the opportunities associated with a younger task.

After ranking the opportunities based on task priority, then, for each task, the opportunities are ranked according to the estimated time it will take for the satellite associated with the opportunity to perform the task. In particular, opportunities that would result in the task being performed sooner are ranked higher than opportunities that would result in the task being performed later, as described above.

One the ranking is completed, then, at block 1906, the highest-ranked opportunity in the entire list is considered.

At block 1908, one or more checks are performed to determine whether the opportunity meets a conflict condition. Examples of these checks are described in further detail below and in connection with FIGS. 20 and 22.

If the conflict condition is not met, then, at block 1912, the opportunity is selected.

At block 1914, all other opportunities generated for the task associated with the selected opportunity are discarded. For example, if Opportunities 1-10 are generated for a task, and Opportunity 1 is selected, then Opportunities 2-10 are discarded.

At block 1915, using the data obtained at block 1903, and in response to selection of the opportunity, any downlinking pass (booked or not booked) on the satellite associated with the opportunity that is determined to overlap with the opportunity is shortened. Any such pass is shortened to represent that fact that the satellite associated with the selected opportunity will not be able to perform both imaging and downlinking at the same time.

At block 1916, it is determined whether all opportunities generated at the end of block 1904 have been considered. If not all opportunities have been considered, then, at block 1917, the process moves to the next highest-ranked opportunity, and the process then returns to block 1908 where the conflict checks are performed.

Once all opportunities have been considered, a number of opportunities will have been selected (and all other opportunities will have been discarded). Then, at block 1918, for each task associated with each selected opportunity, the task is assigned to the satellite associated the selected opportunity. The satellite may then be instructed to perform the task, by uploading appropriate instructions as described above.

If, for any opportunity, the opportunity is determined to meet the conflict condition, then, at block 1910, the opportunity is discarded, and the process moves to block 1916.

Turning to FIG. 20, there is shown a flow diagram illustrating operations that may be taken when determining whether an opportunity meets a conflict condition, to then determine whether the opportunity should either be selected or discarded. It shall be understood that the order of the operations shown in FIG. 20 is exemplary in nature and is not fixed, and one or more of the operations may be performed simultaneously, or in a different order to what is shown.

At block 2002, it is determined whether the opportunity under consideration conflicts with any already-selected opportunity associated with the same satellite of the opportunity under consideration. For example, if the satellite is already scheduled to perform a task during a first period of time, and if the opportunity under consideration corresponds to the same satellite performing a task during a second period of time that overlaps with the first period of time, then the opportunity under consideration will be determined to conflict with the higher-ranked and already-selected opportunity, and the conflict condition will be determined to have been met (block 2006).

If the opportunity does not conflict with any already-selected opportunity, then at block 2004 a check is made as to whether the opportunity violates any orbit constraints. For example, if the satellite associated with the opportunity is unable to perform the task given its current orbit, then it is determined that the opportunity violates an orbit constraint, and at block 2006 the conflict condition is determined to have been met (i.e., the process will then move to block 1910 in FIG. 19). One example of an orbit constraint is that SAR satellites may only be able to image for a certain period of time during a given orbit, due to thermal and other considerations. For example, a satellite may only be able to image for about 90 seconds to 120 seconds out of an approximately 90-minute orbit. If the opportunity takes place within a certain orbit of a certain satellite that already has one or more other imaging tasks assigned to it, and with the one or more already-assigned tasks requiring enough imaging time during the orbit (e.g., 89 seconds) such that it is not possible to assign a further imaging task to the satellite without exceeding the 90-second or other limit, then additional imaging during the same orbit cannot be performed, and the orbit constraint would be violated if the additional opportunity were selected.

If the opportunity is determined to not violate any orbit constraint, then the process moves to block 2008. At block 2008, all available passes are identified for both the opportunity under consideration and all previously-selected opportunities associated with the same satellite as that of the opportunity under consideration. As mentioned above, a pass represents a period of time during which the satellite will be able to perform downlinking to a ground station. Only passes that are related to the same satellite as the opportunity under consideration are identified since there is no need to identify the passes on other satellites.

At block 2010, the opportunity is checked to see whether it overlaps with any of the identified passes. For each pass that overlaps with the opportunity, then, at block 2012, the pass is temporarily shortened to remove the overlap. An example of this is shown in FIG. 21. As can be seen in this drawing, pass 2104 overlaps opportunity 2102. Therefore, pass 2104 is temporarily shortened by removing portion 2106 such that the overlap is removed. An overlapping pass is temporarily shortened to take into account any potential impact that selecting the opportunity would have on higher-ranked and previously-selected opportunities associated with the same satellite as that of the opportunity under consideration . An opportunity may overlap with no passes, with only one pass, or with more than one pass, in which case all of the passes that overlap would be temporarily shortened.

At block 2014, based on each available pass (including any shortened passes), it is determined whether the satellite associated with the opportunity under consideration, as well as each opportunity that has already been selected for that satellite, would still be able to downlink the task data associated with each opportunity, within certain constraints such as the time period specified in each task's associated service level agreement (SLA). An SLA will typically specify an agreed-upon deadline for downlinking the task data that is to be captured. If not, then the process moves to block 2006, and the conflict condition is determined to have been met. Task data can be, for example, the SAR data that is collected by the satellite and sent down to the ground via a ground station, for processing into an image.

If, on the other hand, the satellite associated with the opportunity under consideration, as well as each opportunity that has already been selected for that satellite, would still be able to downlink the task data associated with each opportunity within the time period specified in each task's associated SLA, then the process moves to block 2016. At block 2016, the conflict condition is determined to not have been met, and the opportunity under consideration is selected (i.e., the process will then move to block 1912 in FIG. 19).

Turning to FIG. 22, there is shown a flow diagram illustrating operations that may be taken at block 2014 of FIG. 20, i.e. when determining whether the task data for the opportunity under consideration, as well as the task data for all prior selected opportunities relating to the same satellite, is downlinkable. It shall be understood that the order of the operations shown in FIG. 22 is exemplary in nature and is not fixed, and one or more of the operations may be performed simultaneously, or in a different order to what is shown.

Generally, the difficulty lies in identifying one or more passes that can be used to downlink an opportunity's data without interfering with the need to downlink the data associated with all prior selected opportunities associated with the same satellite. In other words, before selecting an opportunity, a check is done by going through and identifying passes for each previously-selected opportunity associated with the same satellite, as well as passes for the current opportunity under consideration. According to some embodiments, however, it is also possible to first perform a check to ensure that, for a given opportunity and the SLA of its associated task, there exists at least one available pass. If not, there is no need to perform the process set out in FIG. 22, and the opportunity can simply be discarded (block 1910 in FIG. 19). Although not necessary, this optional additional step may in some cases save some processing time. In practice, however, this step may not be required because identifying valid downlinking passes for a given opportunity can be less of a challenge than ensuring that there are sufficient downlinking passes for the current opportunity and all previously-selected opportunities associated with the same satellite. It may be the case that some opportunities have to be discarded due to lack of available downlinking passes.

The process described in FIG. 22 only needs to be run based on passes and opportunities that relate to the same satellite. Starting at block 2202, based on all previously-selected opportunities as well as the opportunity under consideration (i.e. the opportunity input to block 2014 in FIG. 20), the highest-ranked opportunity is considered.

At block 2204, a first one of the identified passes is considered. For example, the identified passes may be ordered based on how soon they occur after the opportunity; and the closest pass will be considered first. If two or more of the identified passes start at the same time, then the size of the pass can be used as a tiebreaker, for example by selecting a longer pass over a shorter pass.

At block 2206, a check is performed to ensure the pass can be used. For example, the pass can be used if the pass starts within a time period set by the SLA associated with the task. As described above, for tasks relating to image acquisition, an SLA will specify an agreed-upon deadline for downlinking the image data that is to be captured. If the start time of the pass is outside of the deadline for downlinking the task data, then the pass cannot be used. In another example, some tasks may require that the task data be downlinked only to certain ground stations, for example for security purposes. If the pass being considered is not associated with any such permitted ground station, then the pass cannot be used. If, however, the pass is wholly or partially within the period of time defined by the SLA and is associated with a permitted ground station, then the pass can be used. Note that a pass does not necessarily need to be long enough such that all the task data can be downlinked during the time period of the pass, as multiple passes can be used to downlink all of the task data.

If the pass cannot be used, the process moves to block 2208. If more passes are available, the process loops back to block 2204 to consider the next available pass. However, if no more passes are available, then there is no way for the task data associated with the opportunity being considered to be downlinked, and the opportunity conflicts as indicated by block 2210. In such a case, the conflict condition of block 2006 of FIG. 20 has been met.

However, if the pass can be used, the process moves to block 2212, at which point the pass is selected and as much as possible of the task data is assigned to the pass. It may be that all of the task data can be downlinked by the pass. However, if not, the process searches for other available passes that can complete the downlinking of the remaining task data.

At block 2214, all passes overlapping with the selected pass that has task data assigned to it are shortened. An overlapping pass can occur, for example, if a satellite is within downlinking range of two or more ground stations at the same time. When a satellite is downlinking to one ground station, it may not be able to simultaneously downlink to other ground stations. In this case, any passes associated with the other ground stations that overlap the selected pass need to be partially or wholly shortened. Passes only need to be shortened if they overlap with a portion of a selected pass that has task data assigned to it. If a pass overlaps with a portion of a selected pass, but that portion does not have task data assigned to it, then no shortening is required. Any shortening can be carried out in the manner shown in FIG. 21, but instead of element 2102 representing an opportunity, element 2102 represents a portion of a selected pass to which task data is assigned for downlinking. Pass 2104 is correspondingly shortened by removing section 2106. Shortened pass 2104 is still available to be used for downlinking for this or other opportunities. Furthermore, in addition to pass 2104, there can be other passes overlapping pass 2102, in which case any such other passes would need to be shortened.

At block 2216, a check is made to determine whether all of the data associated with the task of the opportunity under consideration has been assigned to one or more passes for downlinking. If all the task data has been assigned to one or more passes for downlinking, then at block 2218 the opportunity is considered to not interfere with the previously-selected opportunities associated with the same satellite, and the process then moves to block 2220.

At block 2220, a check is made to determine whether all opportunities in the list input to block 2202 have been considered. If all opportunities have been considered, then the process moves to block 2016 in FIG. 20. If not all opportunities have been considered, then the process returns to block 2202 at which the next highest-ranked opportunity is considered.

Returning to block 2216, if all of the task data for the opportunity being considered has not been assigned to one or more passes for downlinking, then at block 2208 it is determined whether there are any identified passes that have not yet been considered (including now any shortened passes from block 2214). If at least one pass has not yet been considered, then the process moves to block 2204 at which the next identified pass is considered. Through this process, all the task data can be assigned to a single pass, or it may be assigned to multiple passes in order to complete the downlinking.

If all passes have been considered, then there are not enough available passes to downlink the data associated with the tasks of all previously-selected opportunities and the task of the opportunity under consideration, and the opportunity under consideration cannot be selected. The opportunity is therefore considered to meet the conflict condition (block 2210), and the process moves to block 2006 in FIG. 20.

It should be noted that, according to some embodiments, the process of FIG. 22 can be used as an intermediate check for downlinkability (block 2014 of FIG. 20), by returning feasible or not feasible for every opportunity being considered. Since at block 2014 the final list of selected opportunities hasn't yet been determined, this check is only carried out on a copy of the pass data that will be used to task the satellites, and not on the actual data itself. Otherwise, the shortening of passes as part of this check may include passes that aren't actually used for downlinking (e.g., if the opportunity's associated task data is determined to not be downlinkable), and the pass would then not be available for consideration with other opportunities even though it is not actually being used. Once the feasible or not feasible criterion has been checked, the copy of the data may be discarded.

However, once the final list of selected opportunities has been determined, the same process can be used to assign tasks to the satellites that will be performing the tasks and the downlinking. This approach is based on the realization that an optimum way to determine if the task data of a particular opportunity is downlinkable or not is to try assigning passes to all the previously-selected opportunities for that satellite, as well as the current opportunity, in as real a way as possible. As such, the process in FIG. 22 may be used for both the checks and for the final assignment of tasks to the satellites that will be performing the tasks and the downlinking.

The embodiments described above are fully automatic. In some examples, a user or operator of the system may manually instruct some steps of the method to be carried out.

In the described embodiments, the system may be implemented as any form of a computing and/or electronic device. Such a device may comprise one or more processors which may be microprocessors, controllers, or any other suitable type of processors for processing computer-executable instructions to control the operation of the device. In some examples, for example where a system-on-a-chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer-readable instructions, data structures, program modules, or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and Blu-ray disc (BD). Further, a propagated signal is not included within the scope of computer-readable storage media. Computer-readable media also includes communication media including any medium that facilitates transfer of a computer program from one place to another. A connection, for instance, can be a communication medium. For example, software transmitted from a website, server, or other remote source using a coaxial cable, fiber optic cable, twisted pair, DSL, or wireless technologies such as infrared, radio, and microwave is included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device.

Although illustrated as a local device, it will be appreciated that the computing device may be located remotely and accessed via a network or other communication link (for example, using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants, and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms 'component' and 'system' are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term 'exemplary' is intended to mean 'serving as an illustration or example of something'.

Further, to the extent that the term 'includes' is used in either the detailed description or the claims, such term is intended to be inclusive in a manner similar to the term 'comprising' as 'comprising' is interpreted when employed as a transitional word in a claim.

The FIGS. illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

It is furthermore contemplated that any part of any aspect or embodiment discussed in this specification can be implemented or combined with any part of any other aspect or embodiment discussed in this specification.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

**1.** A method of assigning tasks to a constellation of satellites, wherein the method is performed by one or more computer processors and comprises:

receiving one or more tasks, wherein each task is associated with a task priority;
for each task, generating a list of one or more opportunities, wherein each opportunity corresponds to a satellite from the constellation of satellites potentially performing the task, and wherein each opportunity is associated with an expected time for the satellite to potentially perform the task;
ranking each opportunity based on each task priority and based on each expected time;
selecting, based on the ranking, one or more opportunities; and
for each selected opportunity, assigning the task associated with the selected opportunity to the satellite associated with the selected opportunity.

**2.** The method of claim 1, wherein:

each task is further associated with a task age; and
for a first opportunity associated with a first task having a first task priority and a first task age, and for a second opportunity associated with a second task having a second task priority and a second task age, wherein the first and second task priorities are the same, and wherein the first task age is greater than the second task age, ranking each opportunity comprises ranking the first opportunity higher than the second opportunity.

**3.** The method of claim 1 or 2, wherein ranking each opportunity comprises:

ranking each opportunity based on each task priority; and
for each ranked opportunity associated with the same task priority, further ranking the ranked opportunities based on each expected time.

**4.** The method of any one of claims 1-3, wherein selecting the one or more opportunities comprises:

sequentially determining, from the highest-ranked opportunity to the lowest-ranked opportunity, whether each opportunity should be selected; and
for each opportunity that is determined to be selected, selecting the opportunity.

**5.** The method of any one of claims 1-4, wherein selecting the one or more opportunities comprises, for each of the one or more opportunities:

determining whether the opportunity meets a conflict condition; and
in response to determining that the opportunity does not meet the conflict condition, selecting the opportunity.

**6.** The method of claim 5, wherein determining whether the opportunity meets the conflict condition comprises: determining whether the opportunity violates an orbit condition.

**7.** The method of claim 5 or 6, wherein determining whether the opportunity meets the conflict condition comprises: determining whether the opportunity conflicts with a selected higher-ranked opportunity.

**8.** The method of claim 7, wherein determining whether the opportunity conflicts with a selected higher-ranked opportunity comprises:
for (1) each selected higher-ranked opportunity, and (2) the opportunity, determining whether task data associated with the opportunity can be downlinked according to one or more criteria.

9. The method of claim 8, wherein determining whether the task data can be downlinked comprises:

identifying, for (1) each selected higher-ranked opportunity and (2) the opportunity, one or more passes, wherein a pass is a period of time during which the satellite associated with the opportunity can perform downlinking to a ground station; and
determining, based on the identified one or more passes, whether the task data for (1) each selected higher-ranked opportunity and (2) the opportunity can be downlinked according to the one or more criteria.

10. The method of claim 9, wherein:

identifying the one or more passes comprises:

identifying the one or more passes; and
storing a copy of the identified one or more passes as a copy of pass data;

determining whether the task data can be downlinked comprises determining whether the task data can be downlinked based on the copy of pass data; and
the method further comprises, after determining whether the task data can be downlinked, discarding the copy of pass data.

11. The method of claim 9 or 10, wherein:
identifying the one or more passes comprises:

identifying the one or more passes;
determining that the opportunity overlaps at least one identified pass; and
shortening the at least one identified pass to remove the overlap; and
determining, based on the identified one or more passes including the at least one shortened pass, whether the task data for (1) each selected higher-ranked opportunity and (2) the opportunity can be downlinked according to the one or more criteria.

12. The method of any one of claims 9-11, wherein determining, based on the identified one or more passes, whether the task data can be downlinked comprises:

identifying, from among the one or more identified passes, a subset of the one or more passes; and
determining, based on the subset of the one or more identified passes, whether the task data can be downlinked.

13. The method of claim 12, wherein identifying the subset of the one or more passes comprises:

identifying, based on each task associated with (1) each selected higher-ranked opportunity and (2) the opportunity, one or more permitted ground stations; and
identifying, based on the one or more permitted ground stations, the subset of the one or more passes.

14. The method of claim 12 or 13, wherein identifying the subset of the one or more passes comprises:

identifying, from among the one or more identified passes, at least a first pass that overlaps with at least a second pass;
shortening the first pass to remove the overlap; and
identifying, based on the shortened pass, the subset of the one or more passes.

15. A computer-readable medium storing computer program code configured, when executed by one or more processors, to cause the one or more processors to perform a method of assigning tasks to a constellation of satellites, according to any one of claims 1-14.

16. A system comprising:

a constellation of satellites;
one or more ground stations; and
a computer-implemented scheduling device configured to:

receive one or more tasks, wherein each task is associated with a task priority;
for each task, generate a list of one or more opportunities, wherein each opportunity corresponds to a satellite from the constellation of satellites potentially performing the task, and wherein each opportunity is associated with an expected time for the satellite to potentially perform the task;
rank each opportunity based on each task priority and based on each expected time;
select, based on the ranking, one or more opportunities;
for each selected opportunity, assign the task associated with the selected opportunity to the satellite associated with the selected opportunity; and
uplink an instruction to the satellite to which the assigned task has been assigned so as to cause the satellite to perform the assigned task.

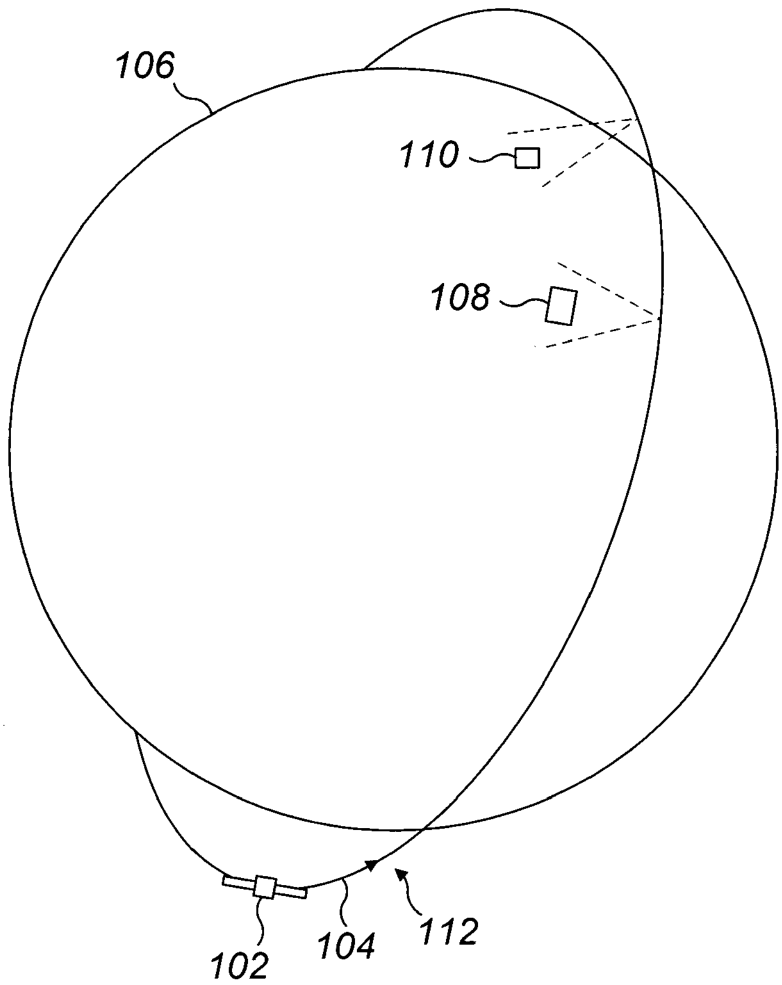


FIG. 1
Prior Art

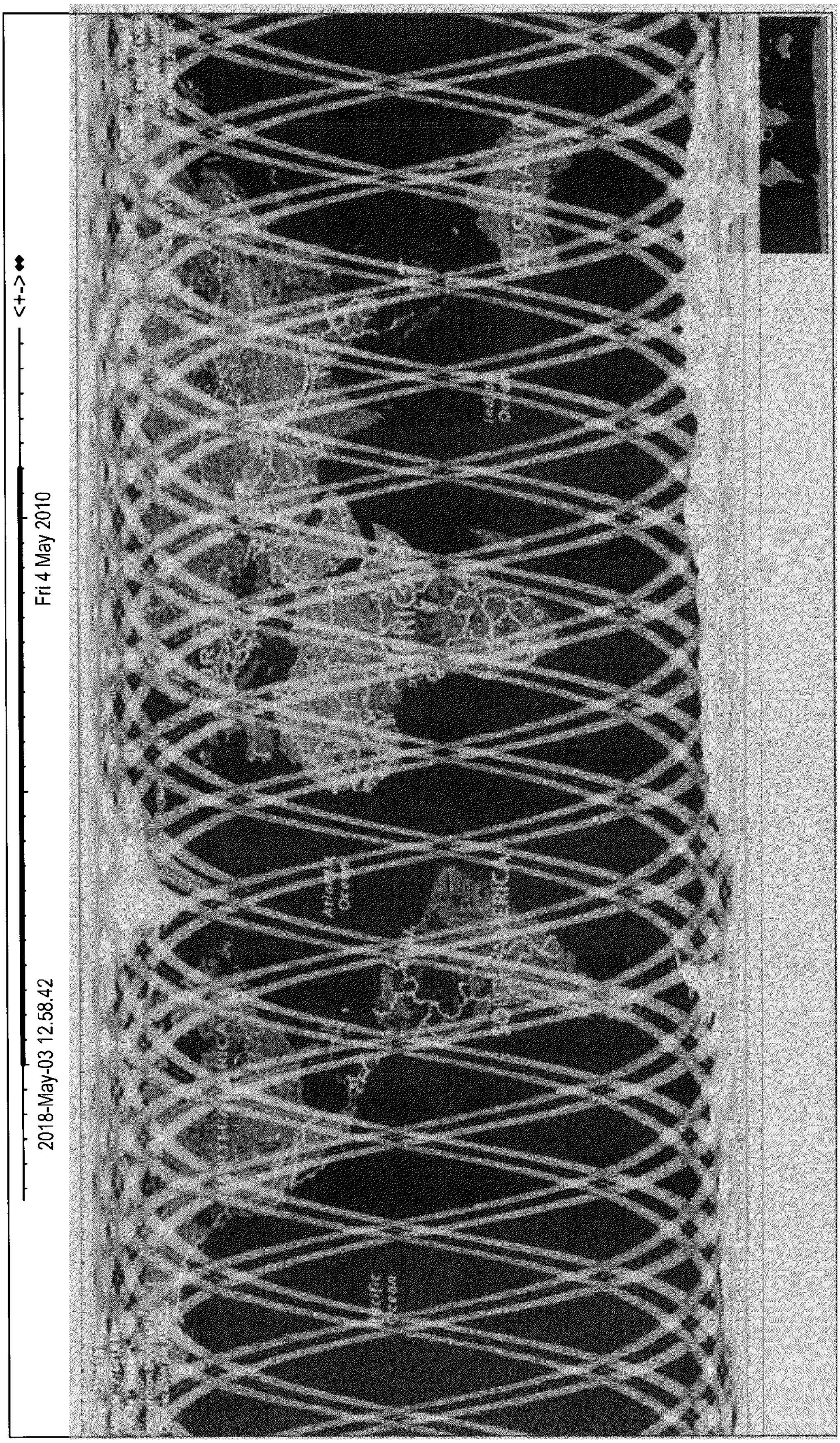


Coverage on Earth of a single satellite path in 24 hours

FIG. 2

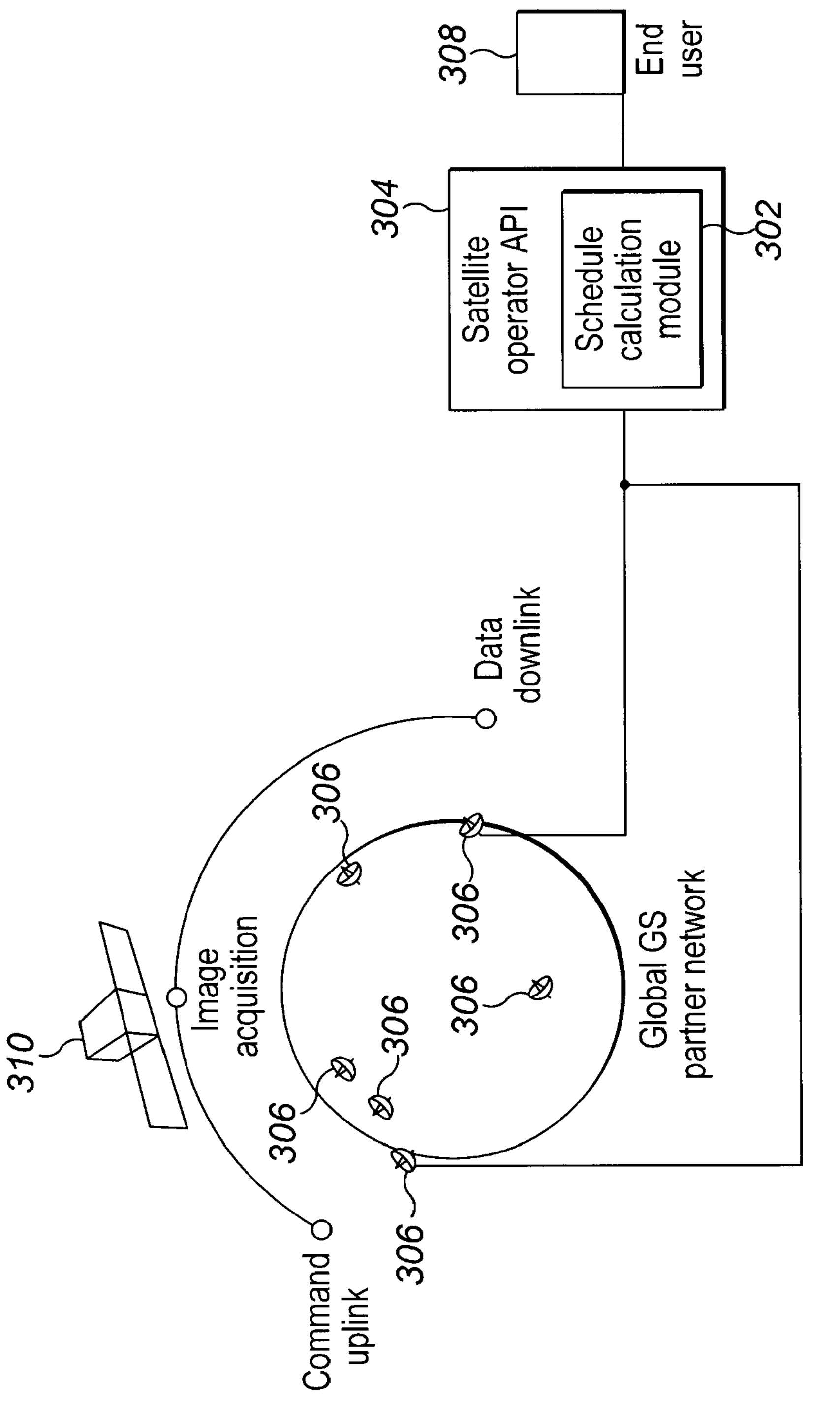
310
Image acquisition
Command uplink
Data downlink
306
306
306
306
306
306
306
Global GS partner network
304
Satellite operator API
Schedule calculation module
302
308
End user

FIG. 3

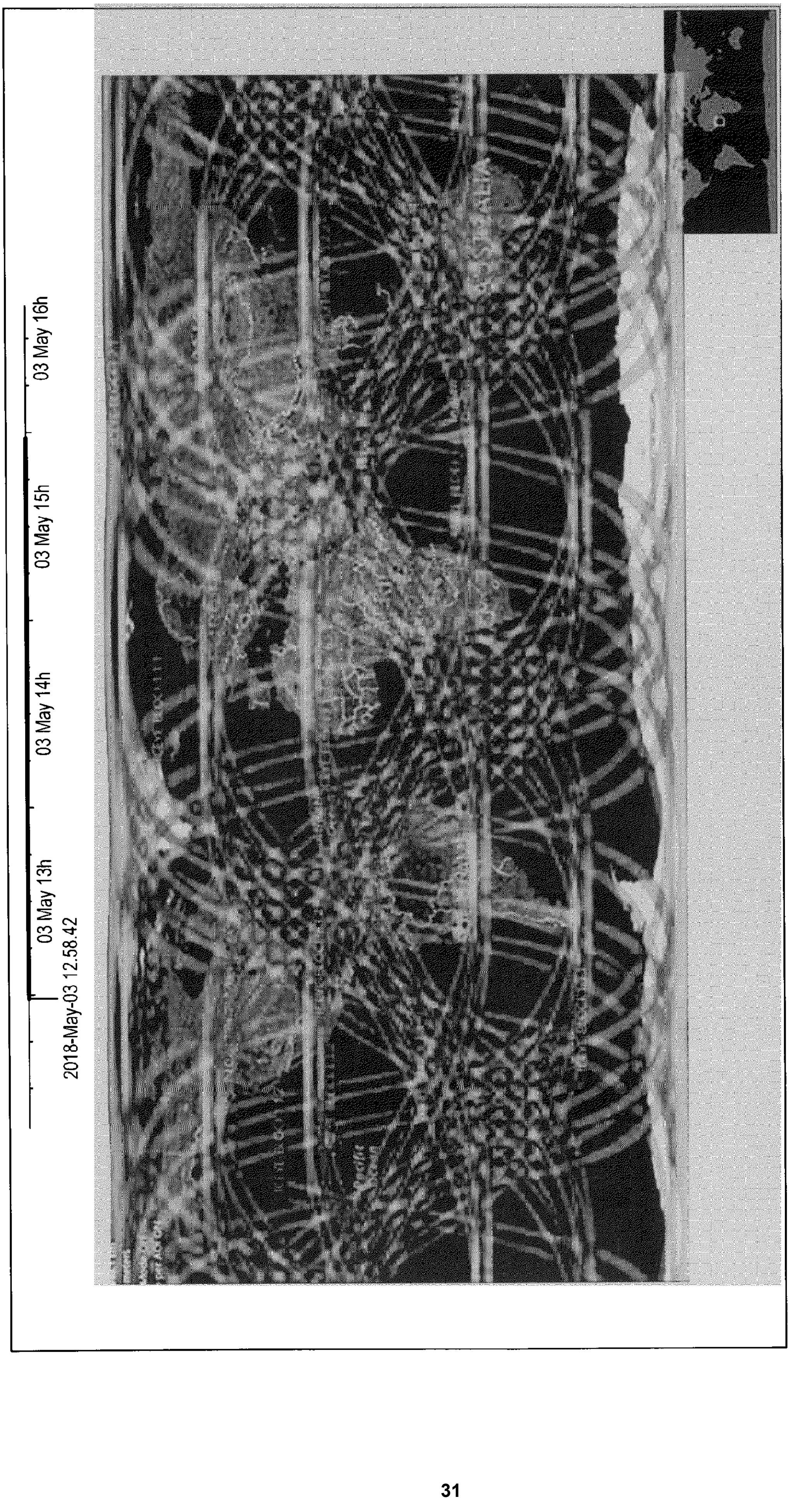


Coverage on Earth of 18 (or similar) satellite path in 3 hours - (18 sat 3 h)

**FIG. 4**

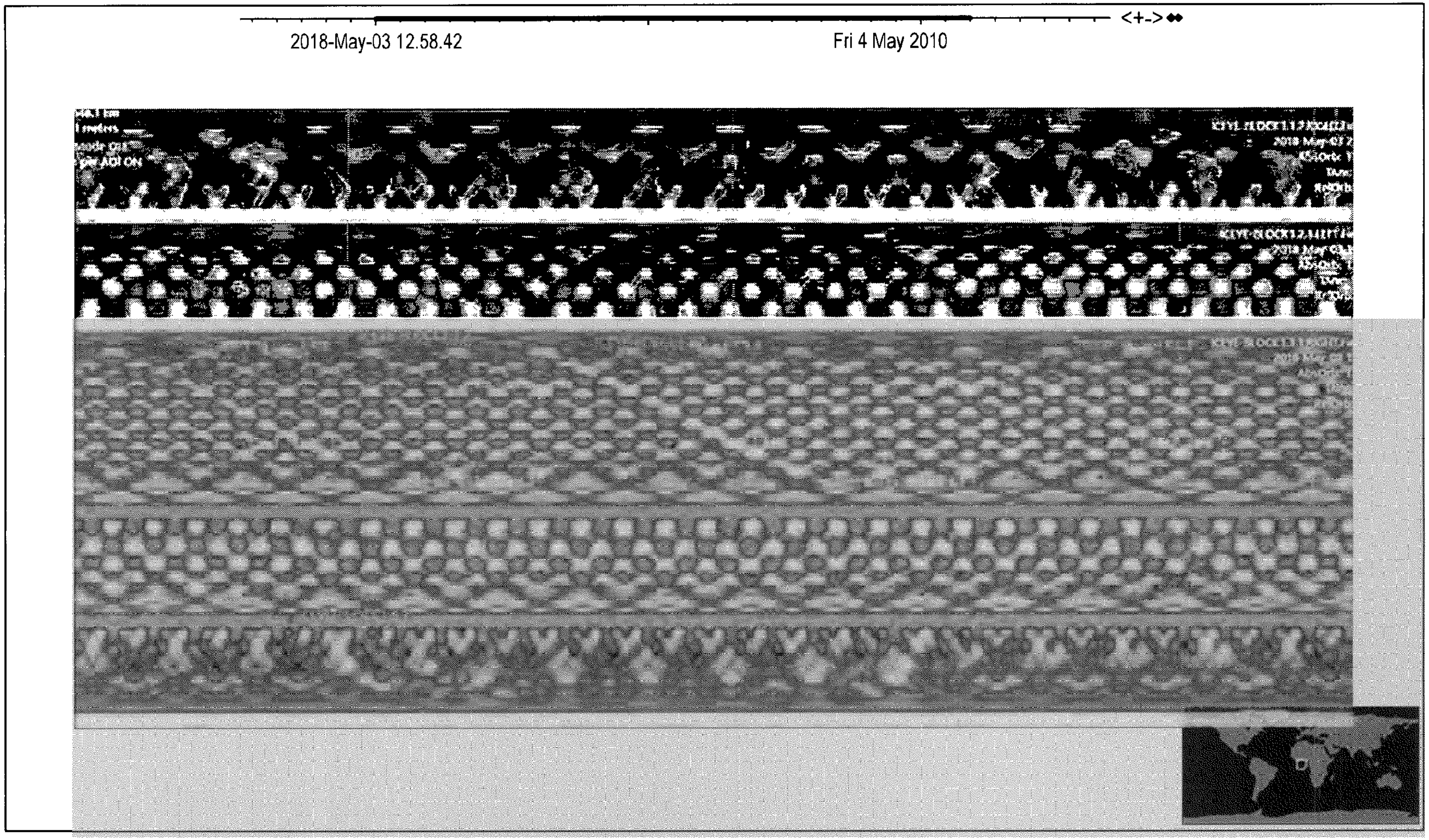


Coverage on Earth of 18 (or similar) satellite path in 24 hours

FIG. 5

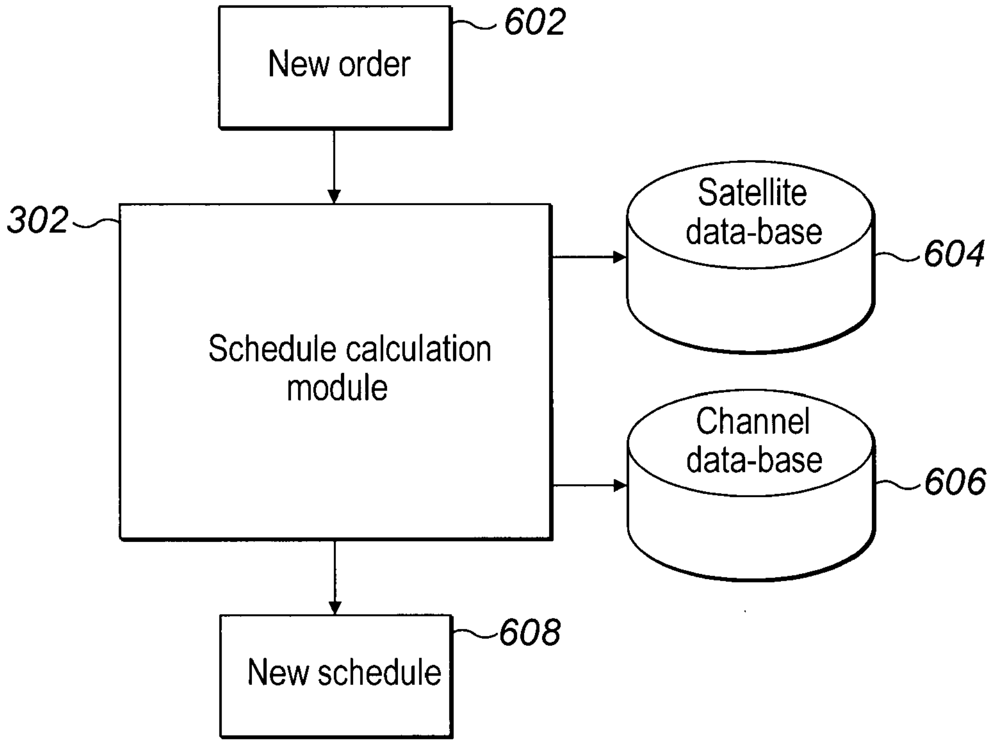
New order
602
302
Schedule calculation module
Satellite data-base
604
Channel data-base
606
New schedule
608

FIG. 6

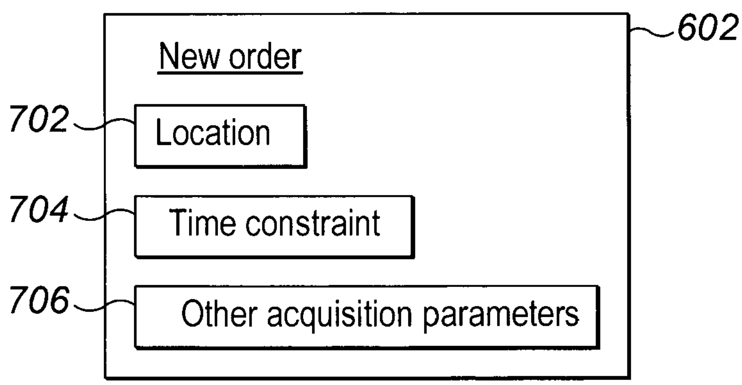
New order
602
702
Location
704
Time constraint
706
Other acquisition parameters

FIG. 7

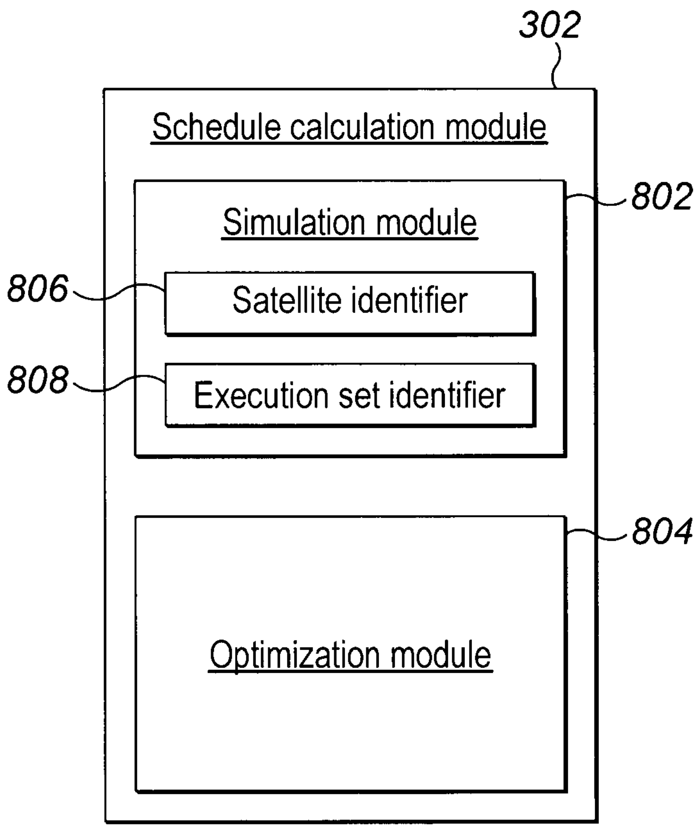
302
Schedule calculation module
Simulation module
802
806
Satellite identifier
808
Execution set identifier
804
Optimization module

FIG. 8A

810

1 sat, 3 days, Tokyo

| Anx (814) | Area covered (816) | Duration (818) | End (820) | Intersection Area (822) | Length (824) | Look Angle (826) | Pass (828) | Satellite (830) | Sensor (832) |
|---|---|---|---|---|---|---|---|---|---|
| 2018-Mar-21 12:35:55 126 | 100.00% | 10 | 2018-Mar-21 15:45:23 304 | 538.5975266 | 71.73651146 | 14.61405682 | ASCENDING | SAT1 | LEFT |
| 2018-Mar-22 01:07:13 387 | 60.44% | 10 | 2018-Mar-22 01:44:48 865 | 325.5071074 | 71.77465319 | 28.88282264 | DESCENDING | SAT1 | LEFT |

812

18 sat, 3 days, Tokyo

| Anx | Area covered | Duration | End | Intersection Area | Length | Look Angle | Pass | Satellite | Sensor |
|---|---|---|---|---|---|---|---|---|---|
| 2018-Mar-21 04:51:51 719 | 100.00% | 10 | 2018-Mar-21 05:01:08 872 | 538.5975266 | 71.9710091 | 28.10745154 | ASCENDING | SAT BLOCK1.1.2 | RIGHT |
| 2018-Mar-21 12:35:06 235 | 100.00% | 10 | 2018-Mar-21 12:44:31 142 | 538.5975266 | 72.13999719 | 17.41635605 | ASCENDING | SAT BLOCK1.2.2 | LEFT |
| 2018-Mar-22 01:02:02 195 | 100.00% | 10 | 2018-Mar-22 01:39:27 300 | 538.5975266 | 72.1482228 | 21.86044642 | DESCENDING | SAT BLOCK1.2.2 | LEFT |
| 2018-Mar-20 18:50:34 751 | 100.00% | 10 | 2018-Mar-20 18:59:52 455 | 538.5975266 | 71.99196903 | 24.77364605 | ASCENDING | SAT BLOCK1.3.1 | RIGHT |
| 2018-Mar-23 08:45:16 705 | 100.00% | 10 | 2018-Mar-23 09:22:49 779 | 538.5975266 | 72.00237178 | 23.90022439 | DESCENDING | SAT BLOCK1.3.2 | RIGHT |
| 2018-Mar-21 08:04:24 627 | 100.00% | 10 | 2018-Mar-21 08:39:56 291 | 538.5975266 | 68.97210287 | 26.05651117 | DESCENDING | SAT BLOCK2.1.1 | LEFT |
| 2018-Mar-22 07:22:25 911 | 97.90% | 10 | 2018-Mar-22 07:57:10 526 | 527.3001139 | 68.84656088 | 16.41429236 | DESCENDING | SAT BLOCK2.1.1 | RIGHT |
| 2018-Mar-23 07:27:03 249 | 8.27% | 10 | 2018-Mar-23 08:02:48 316 | 44.55641461 | 68.97019709 | 34.85790584 | DESCENDING | SAT BLOCK2.1.2 | LEFT |
| 2018-Mar-21 15:50:24 730 | 28.18% | 10 | 2018-Mar-21 16:24:41 163 | 151.7990464 | 68.94738041 | 15.41032965 | DESCENDING | SAT BLOCK2.2.1 | LEFT |
| 2018-Mar-21 08:04:24 383 | 100.00% | 10 | 2018-Mar-21 08:15:48 887 | 538.5975266 | 68.95037568 | 19.0414597 | ASCENDING | SAT BLOCK2.2.1 | LEFT |
| 2018-Mar-22 15:08:25 767 | 100.00% | 10 | 2018-Mar-22 15:42:54 194 | 538.5975266 | 68.76267414 | 27.00367841 | DESCENDING | SAT BLOCK2.2.1 | RIGHT |
| 2018-Mar-21 08:09:01 458 | 100.00% | 10 | 2018-Mar-21 08:21:28 529 | 538.5975266 | 68.70824211 | 32.85757276 | ASCENDING | SAT BLOCK2.2.2 | RIGHT |
| 2018-Mar-20 15:45:47 669 | 4.31% | 10 | 2018-Mar-20 16:20:01 142 | 23.21514483 | 68.69908692 | 34.90591326 | DESCENDING | SAT BLOCK2.2.2 | RIGHT |
| 2018-Mar-21 15:50:27 714 | 100.00% | 10 | 2018-Mar-21 16:01:36 097 | 538.5975266 | 68.9693602 | 31.32051391 | ASCENDING | SAT BLOCK2.3.1 | LEFT |
| 2018-Mar-22 15:55:04 889 | 100.00% | 10 | 2018-Mar-22 16:07:14 541 | 538.5975266 | 68.80687266 | 21.78590351 | ASCENDING | SAT BLOCK2.3.2 | RIGHT |

FIG. 8B

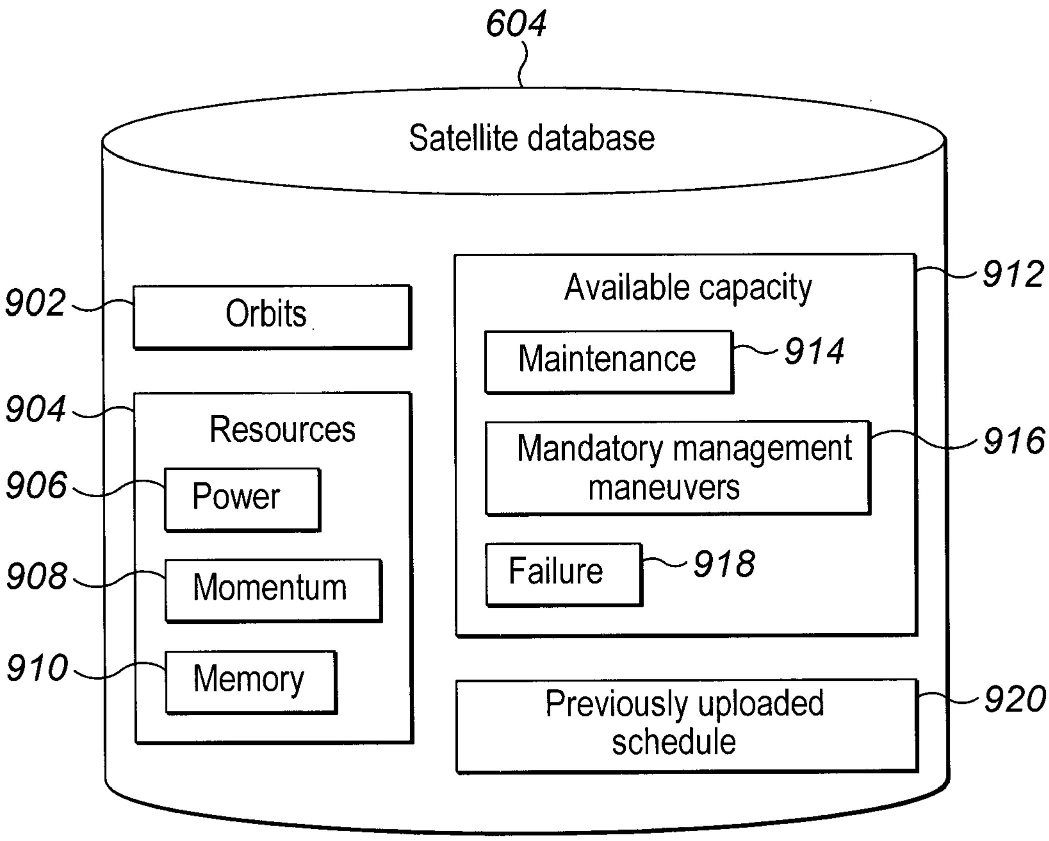
604
Satellite database
902
Orbits
904
Resources
906
Power
908
Momentum
910
Memory
912
Available capacity
Maintenance
914
Mandatory management maneuvers
916
Failure
918
Previously uploaded schedule
920

FIG. 9

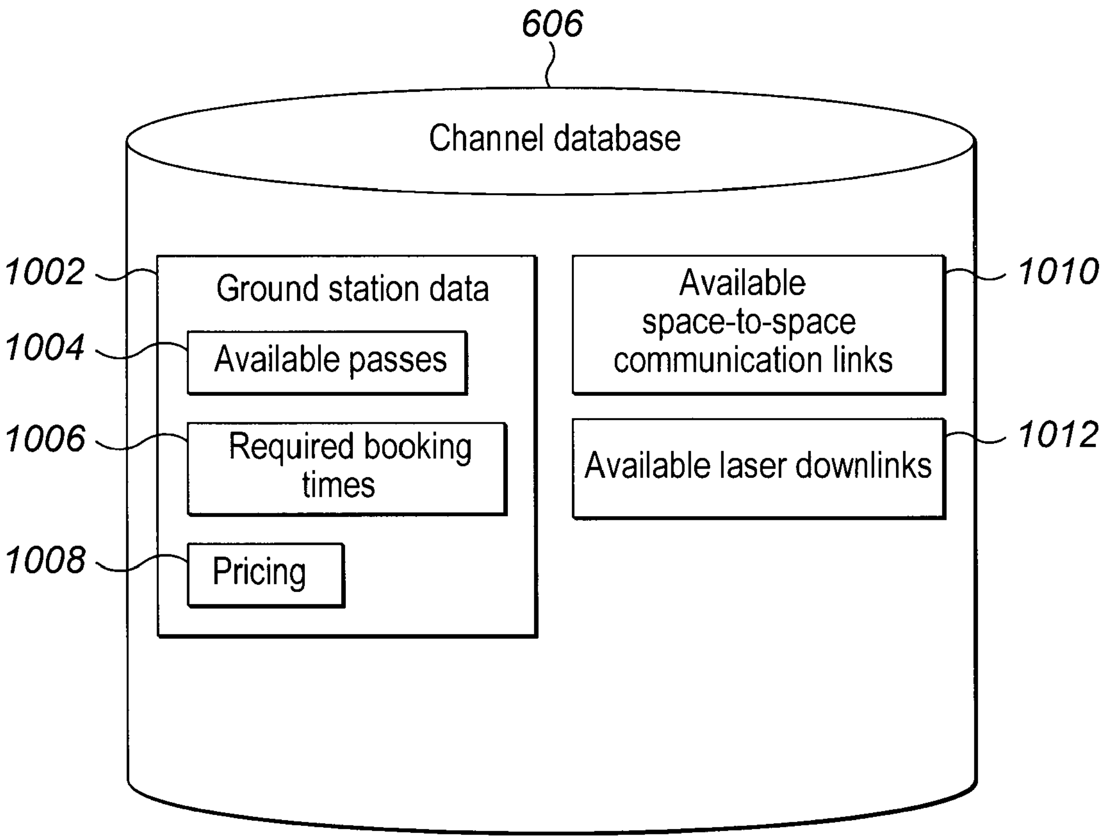
606
Channel database
1002
Ground station data
1004
Available passes
1006
Required booking times
1008
Pricing
1010
Available space-to-space communication links
1012
Available laser downlinks

FIG. 10

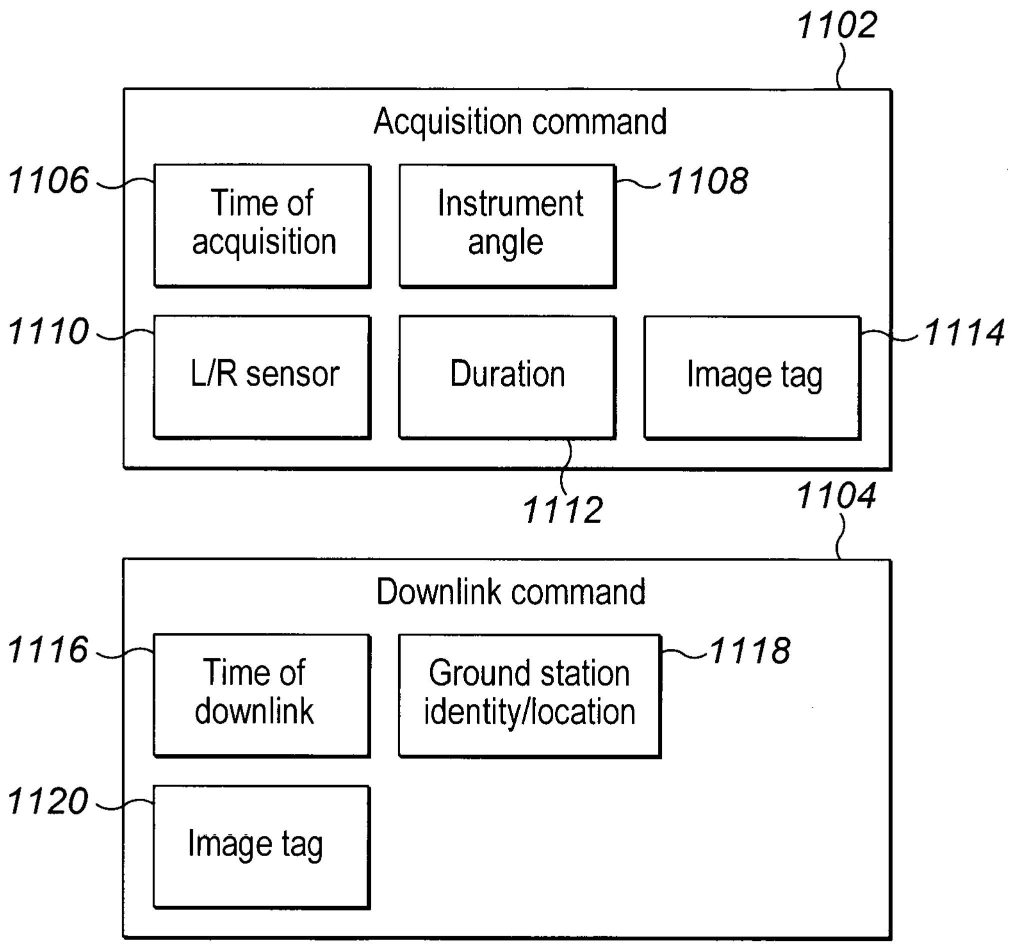
1102
Acquisition command
1106
Time of acquisition
Instrument angle
1108
1110
L/R sensor
Duration
Image tag
1114
1112
1104
Downlink command
1116
Time of downlink
Ground station identity/location
1118
1120
Image tag

FIG. 11

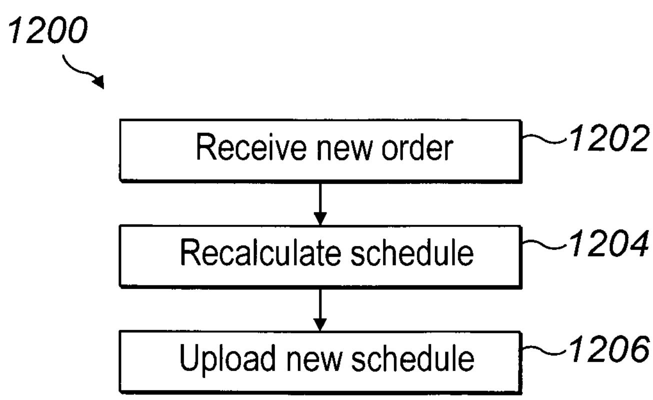
1200
Receive new order
1202
Recalculate schedule
1204
Upload new schedule
1206

FIG. 12

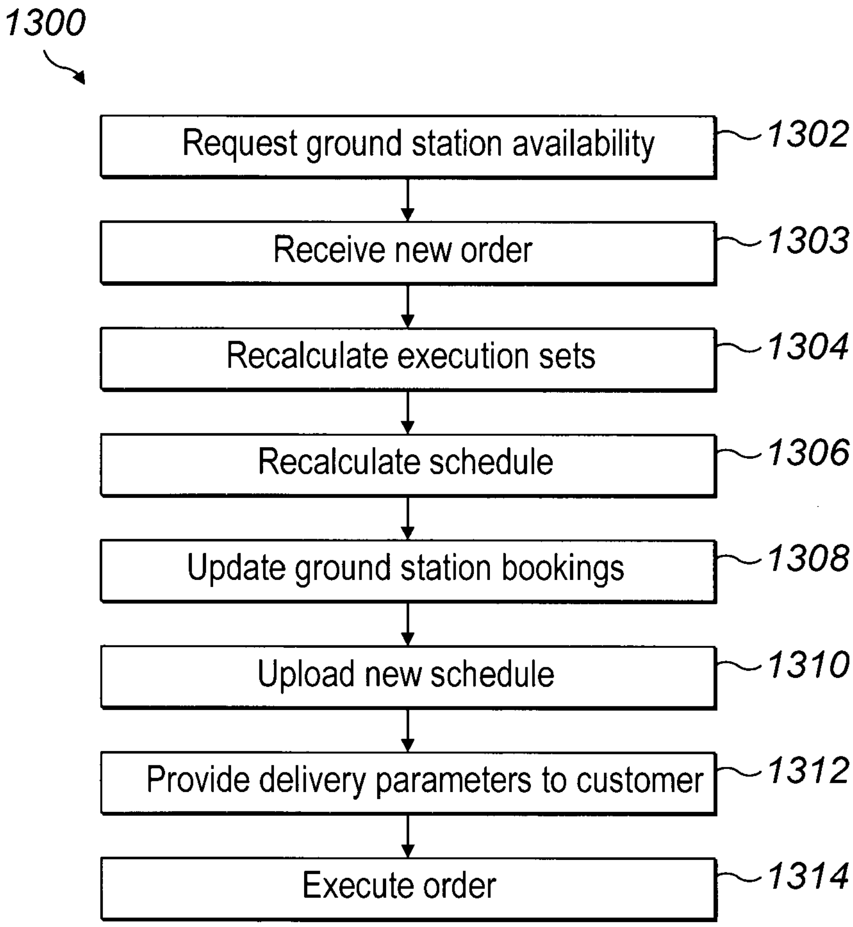
1300
Request ground station availability
1302
Receive new order
1303
Recalculate execution sets
1304
Recalculate schedule
1306
Update ground station bookings
1308
Upload new schedule
1310
Provide delivery parameters to customer
1312
Execute order
1314

FIG. 13

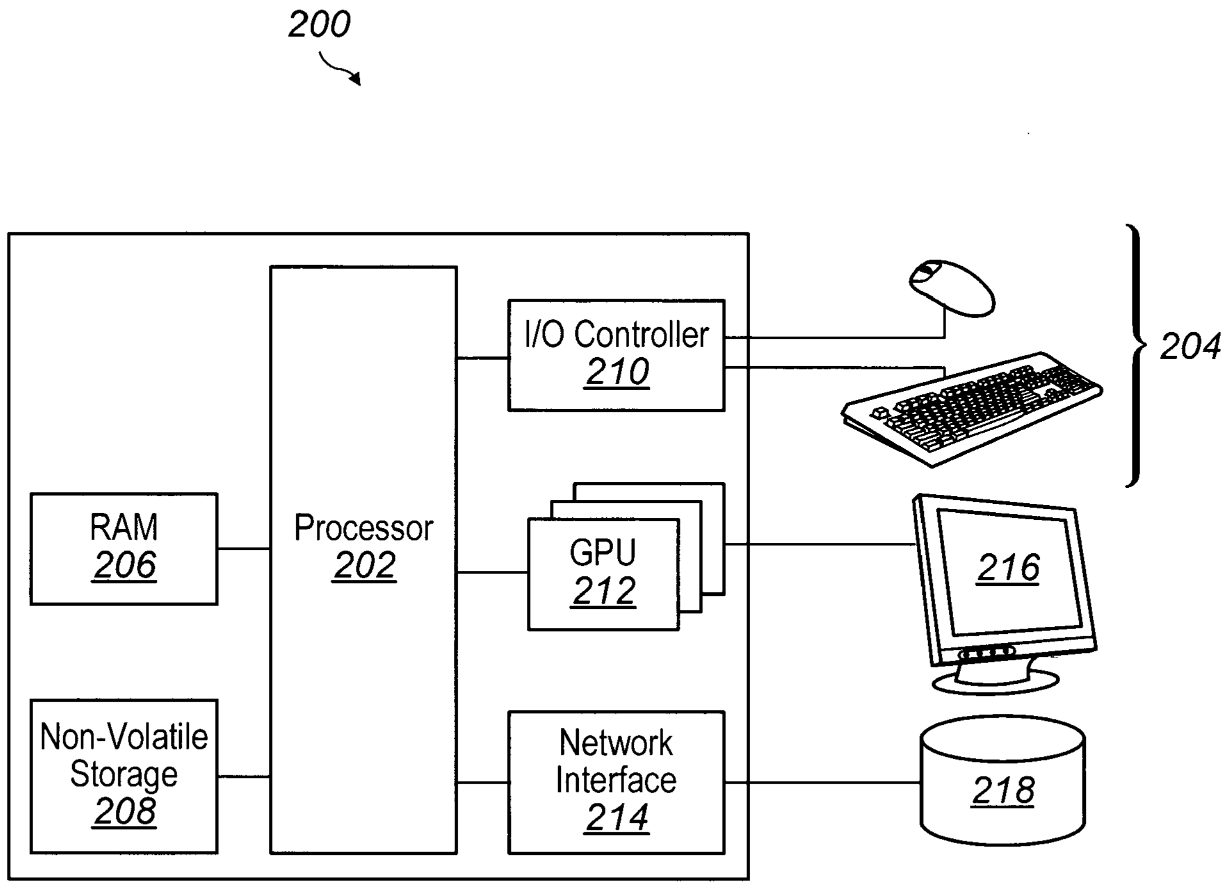
200
I/O Controller
210
204
RAM
206
Processor
202
GPU
212
216
Non-Volatile
Storage
208
Network
Interface
214
218

FIG. 14

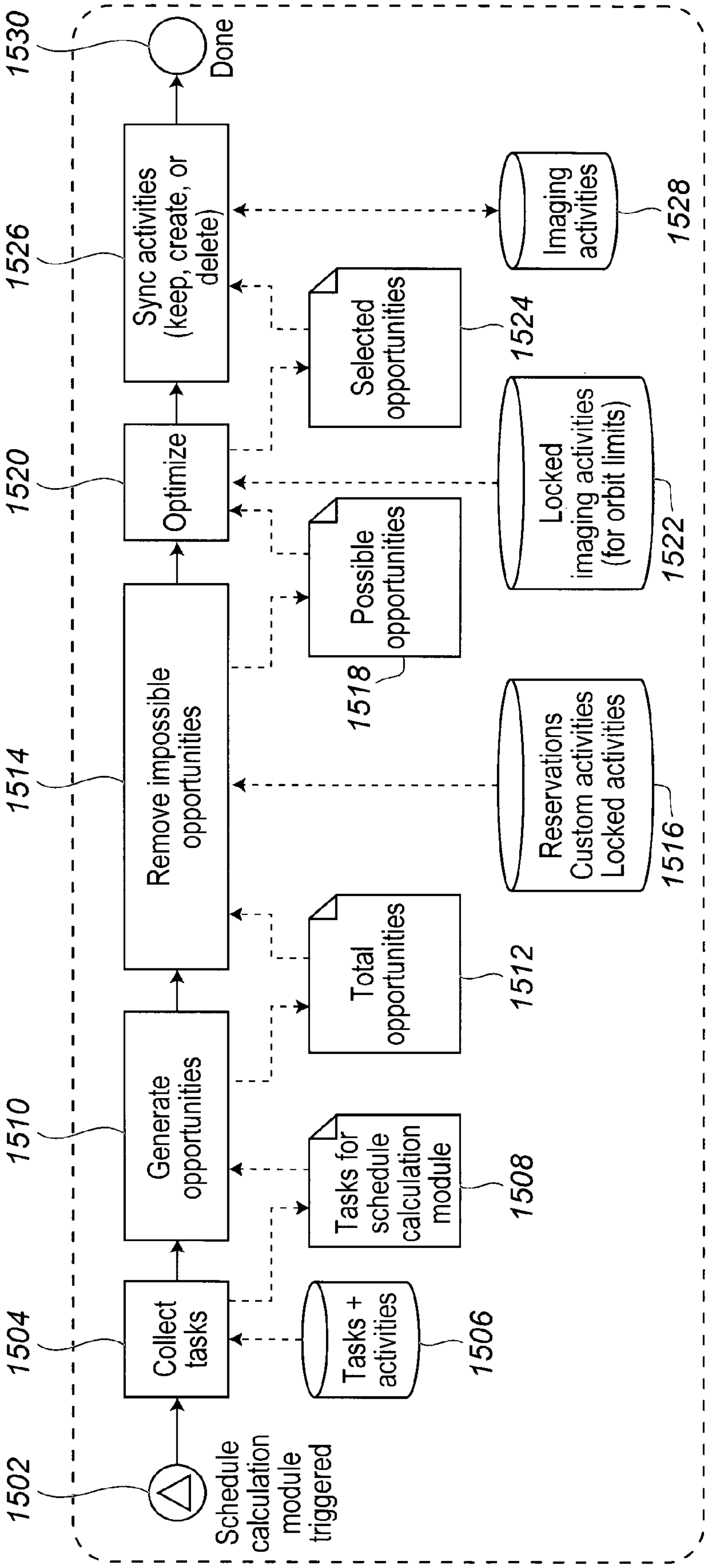
1502
Schedule calculation module triggered
1504
Collect tasks
1506
Tasks + activities
1508
Tasks for schedule calculation module
1510
Generate opportunities
1512
Total opportunities
1514
Remove impossible opportunities
1516
Reservations
Custom activities
Locked activities
1518
Possible opportunities
1520
Optimize
1522
Locked imaging activities (for orbit limits)
1524
Selected opportunities
1526
Sync activities (keep, create, or delete)
1528
Imaging activities
1530
Done

FIG. 15

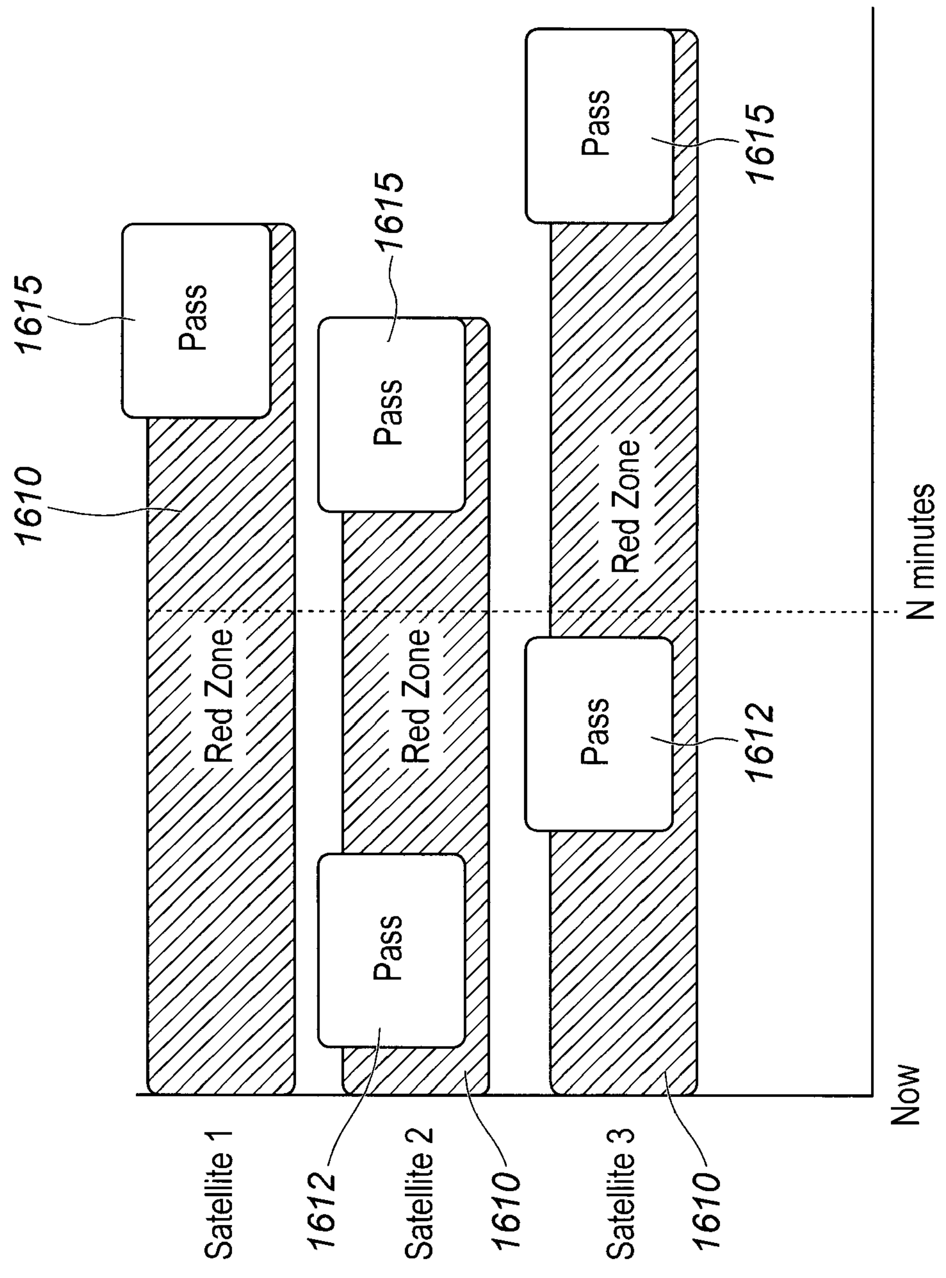
1615
1610
1615
1615
Pass
Pass
Pass
Red Zone
Red Zone
Red Zone
Pass
Pass
Pass
1612
N minutes
Satellite 1
1612
Satellite 2
1610
Satellite 3
1610
Now

FIG. 16

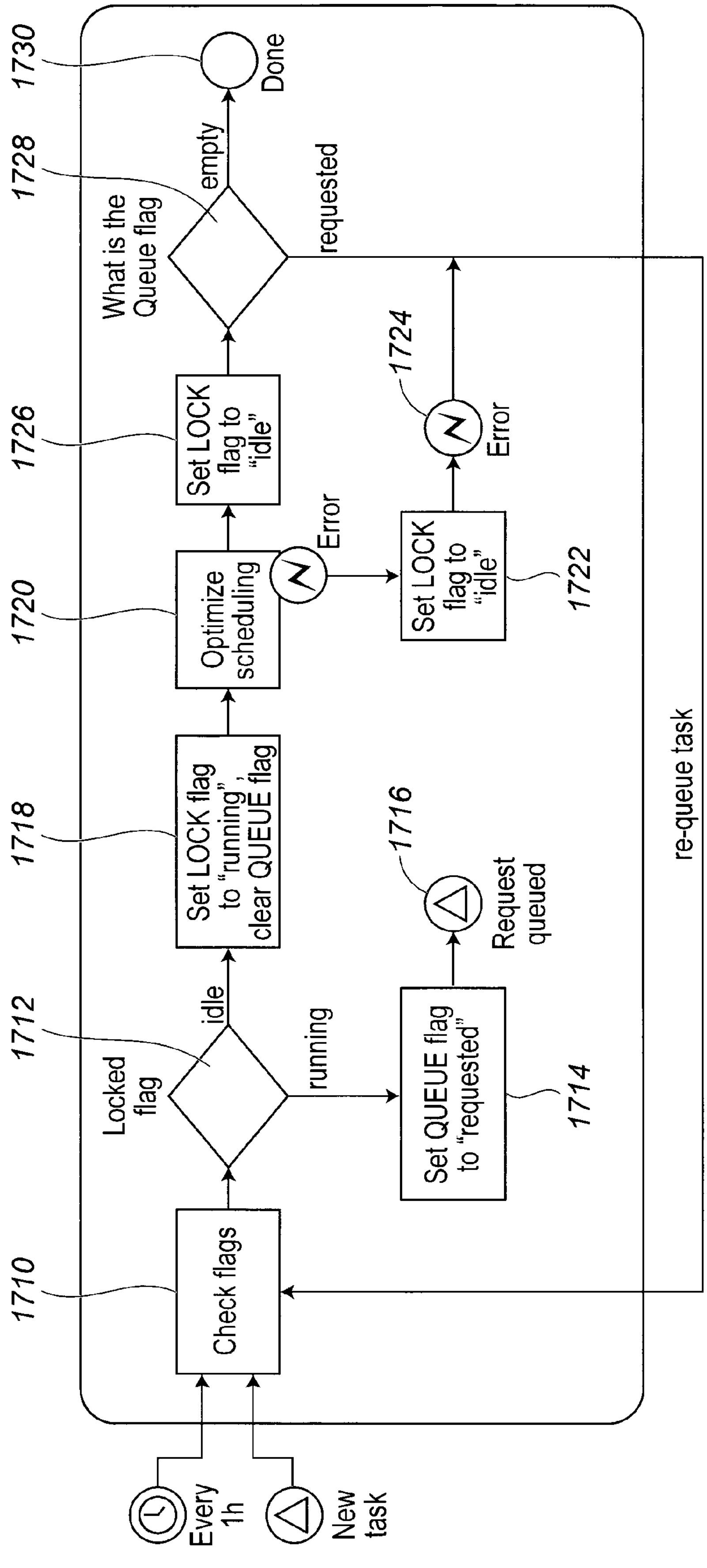
Every 1h
New task
1710
Check flags
1712
Locked flag
idle
running
1714
Set QUEUE flag to "requested"
1716
Request queued
1718
Set LOCK flag to "running", clear QUEUE flag
1720
Optimize scheduling
Error
1722
Set LOCK flag to "idle"
1724
Error
1726
Set LOCK flag to "idle"
1728
What is the Queue flag
empty
requested
1730
Done
re-queue task

FIG. 17

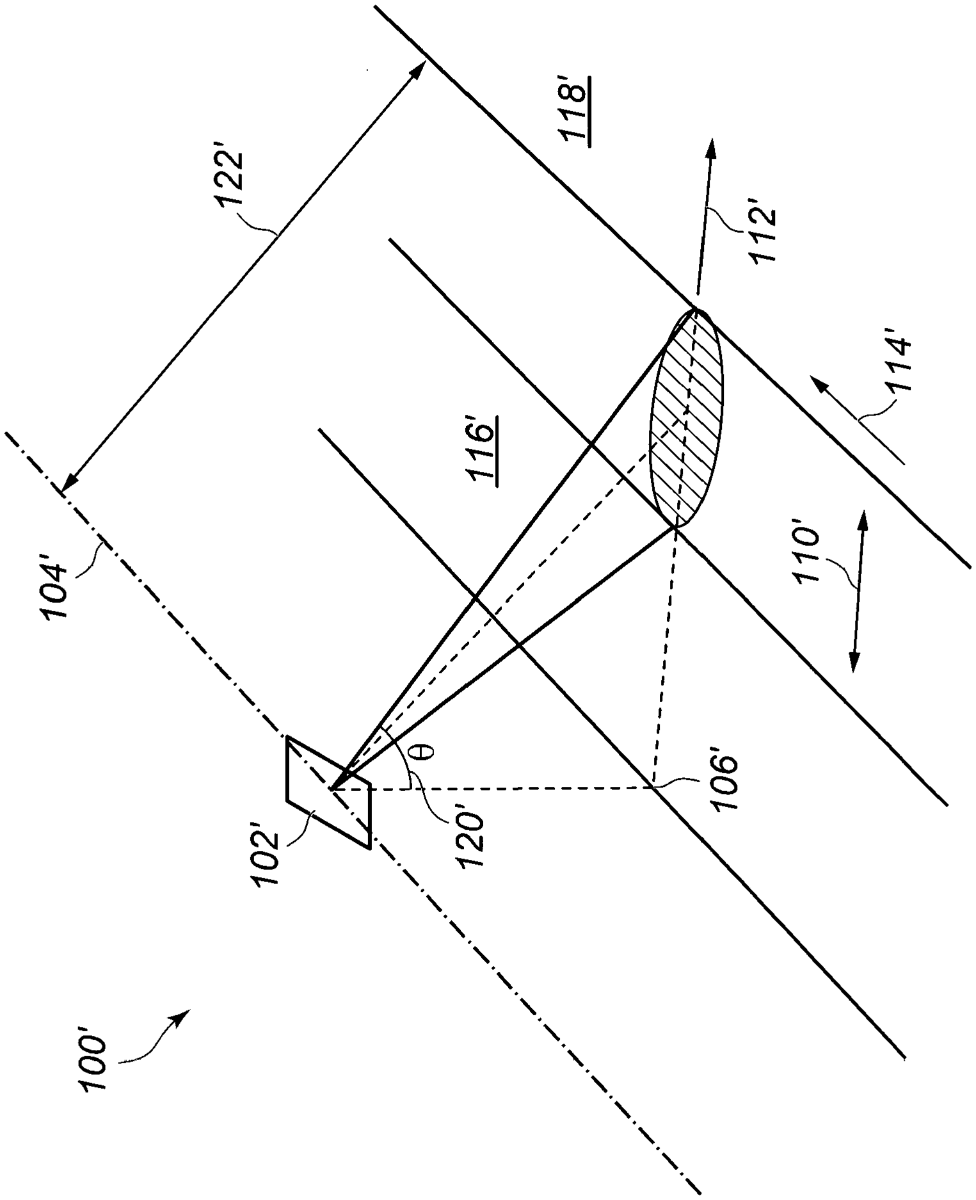


FIG. 18

FIG. 19

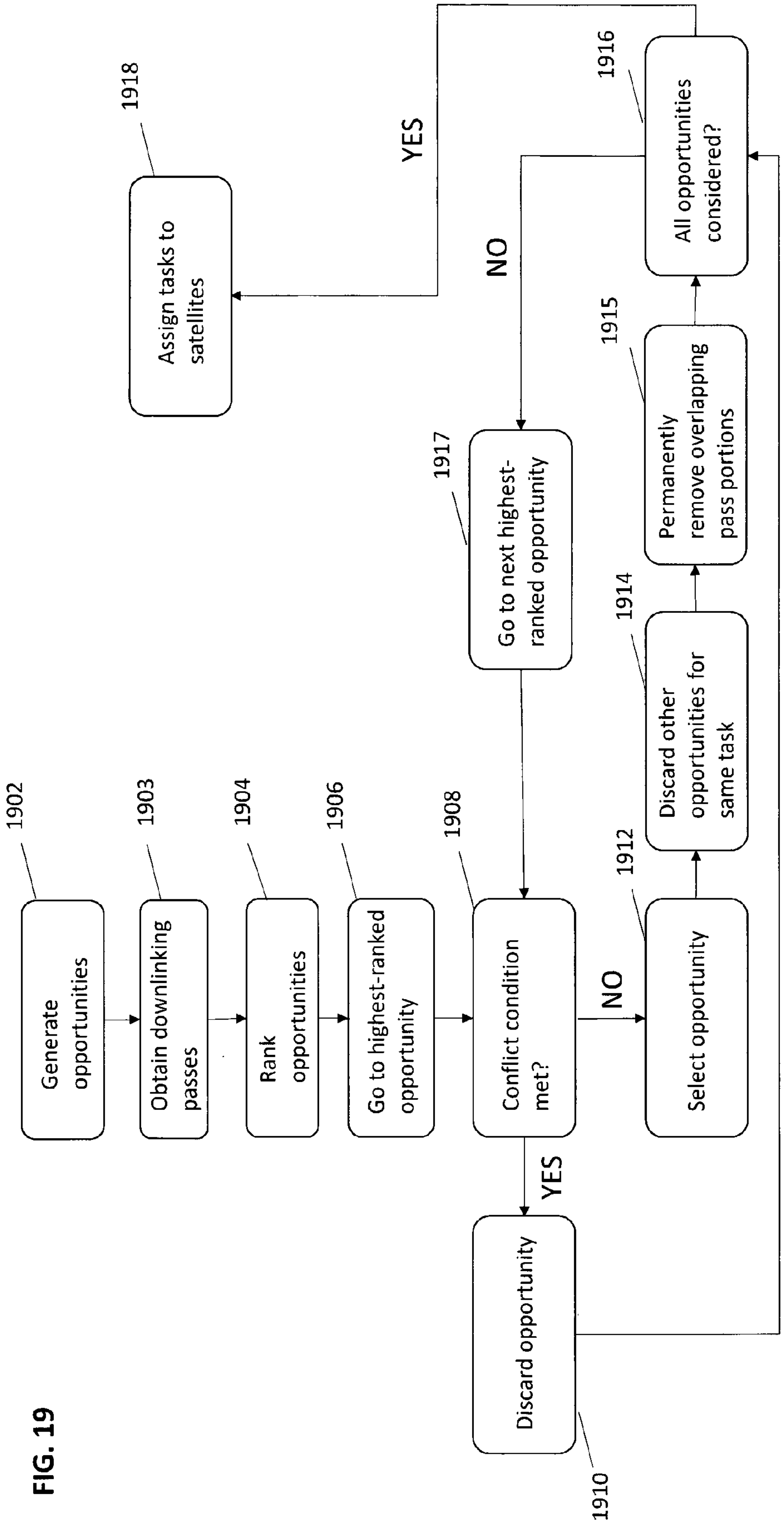
Generate opportunities
1902
Obtain downlinking passes
1903
Rank opportunities
1904
Go to highest-ranked opportunity
1906
Conflict condition met?
1908
YES
Discard opportunity
1910
NO
Select opportunity
1912
Discard other opportunities for same task
1914
Permanently remove overlapping pass portions
1915
All opportunities considered?
1916
NO
Go to next highest-ranked opportunity
1917
YES
Assign tasks to satellites
1918

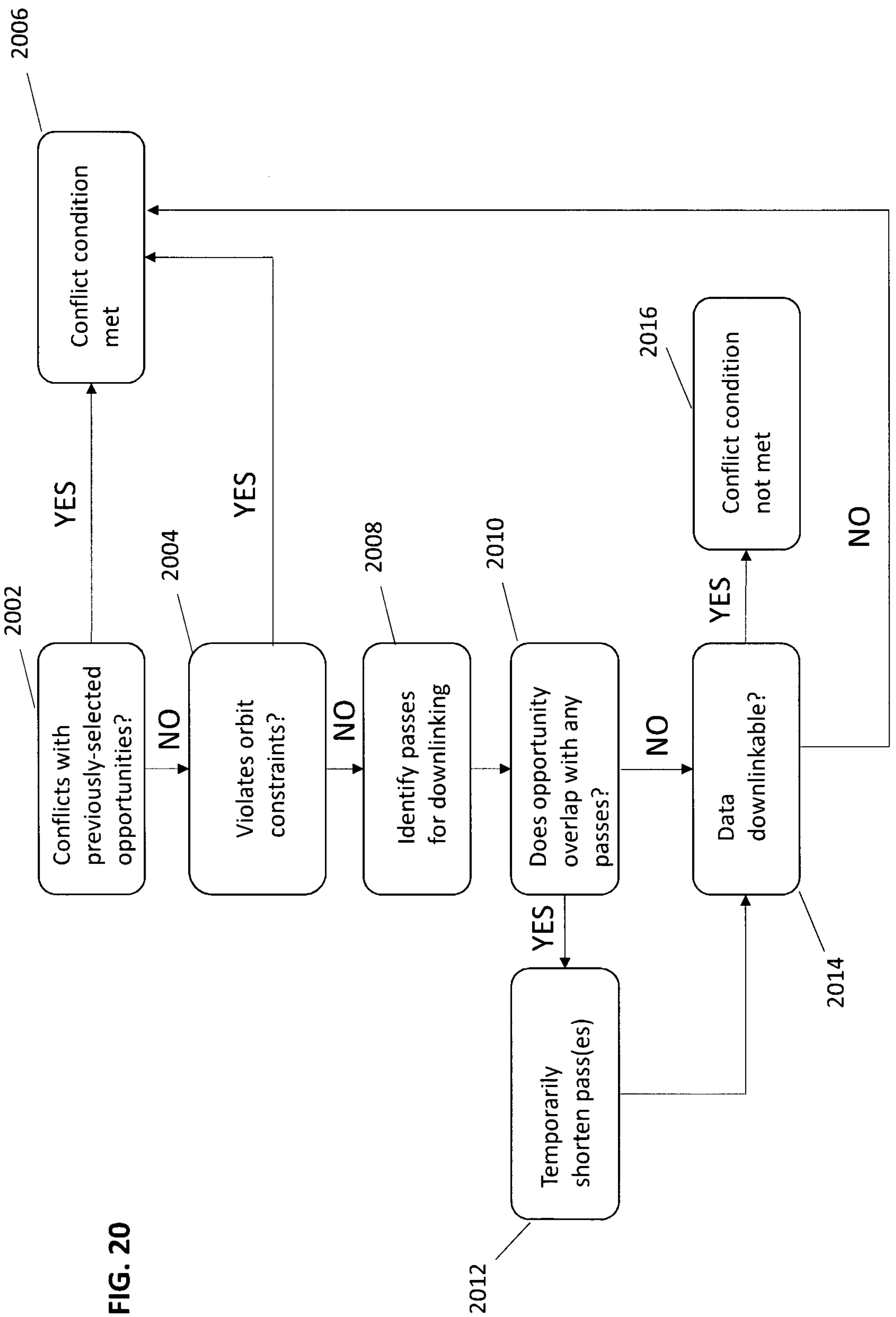
Conflicts with previously-selected opportunities?
2002
YES
NO
Conflict condition met
2006
Violates orbit constraints?
2004
YES
NO
Identify passes for downlinking
2008
Does opportunity overlap with any passes?
2010
YES
NO
Temporarily shorten pass(es)
2012
Data downlinkable?
2014
YES
NO
Conflict condition not met
2016

FIG. 20

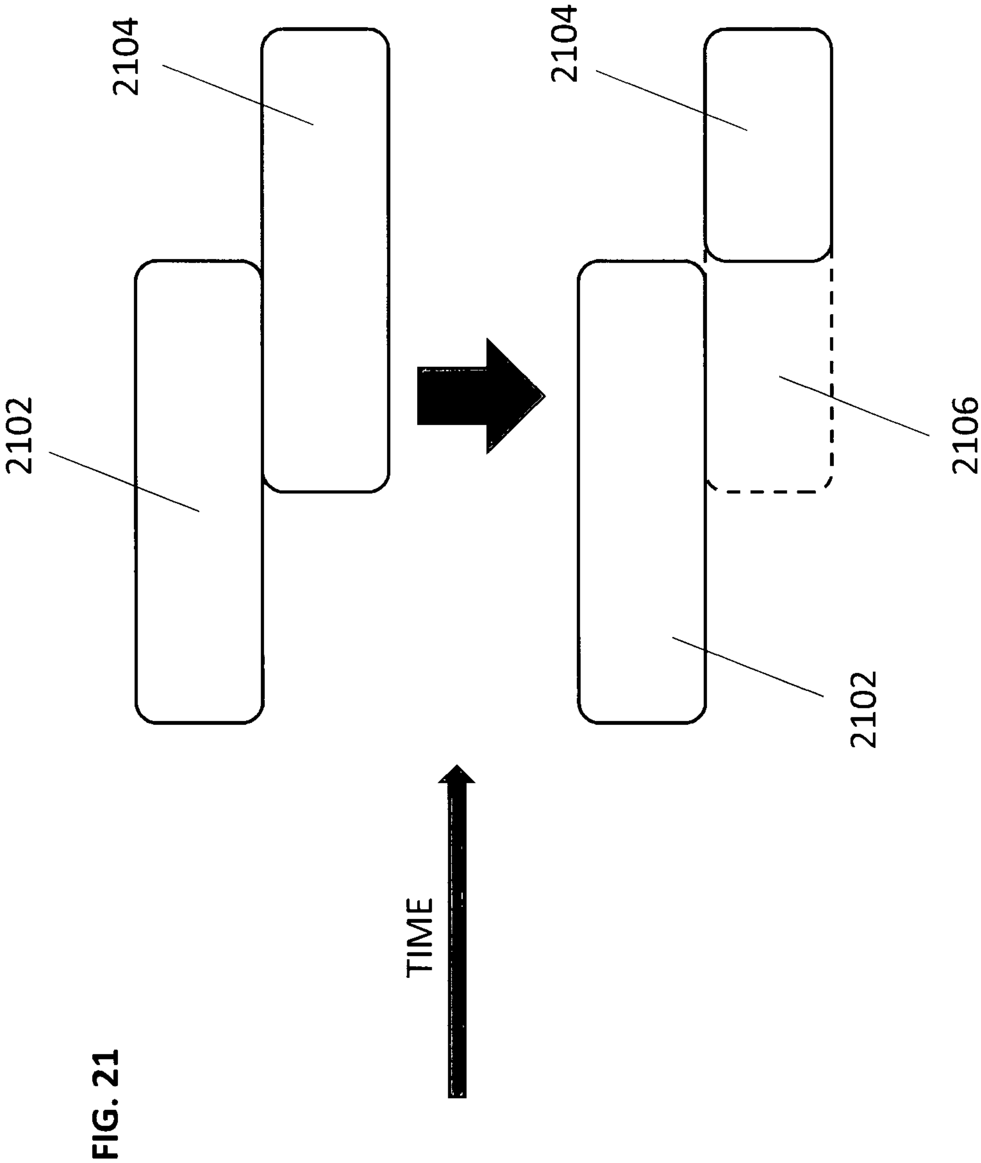


FIG. 21

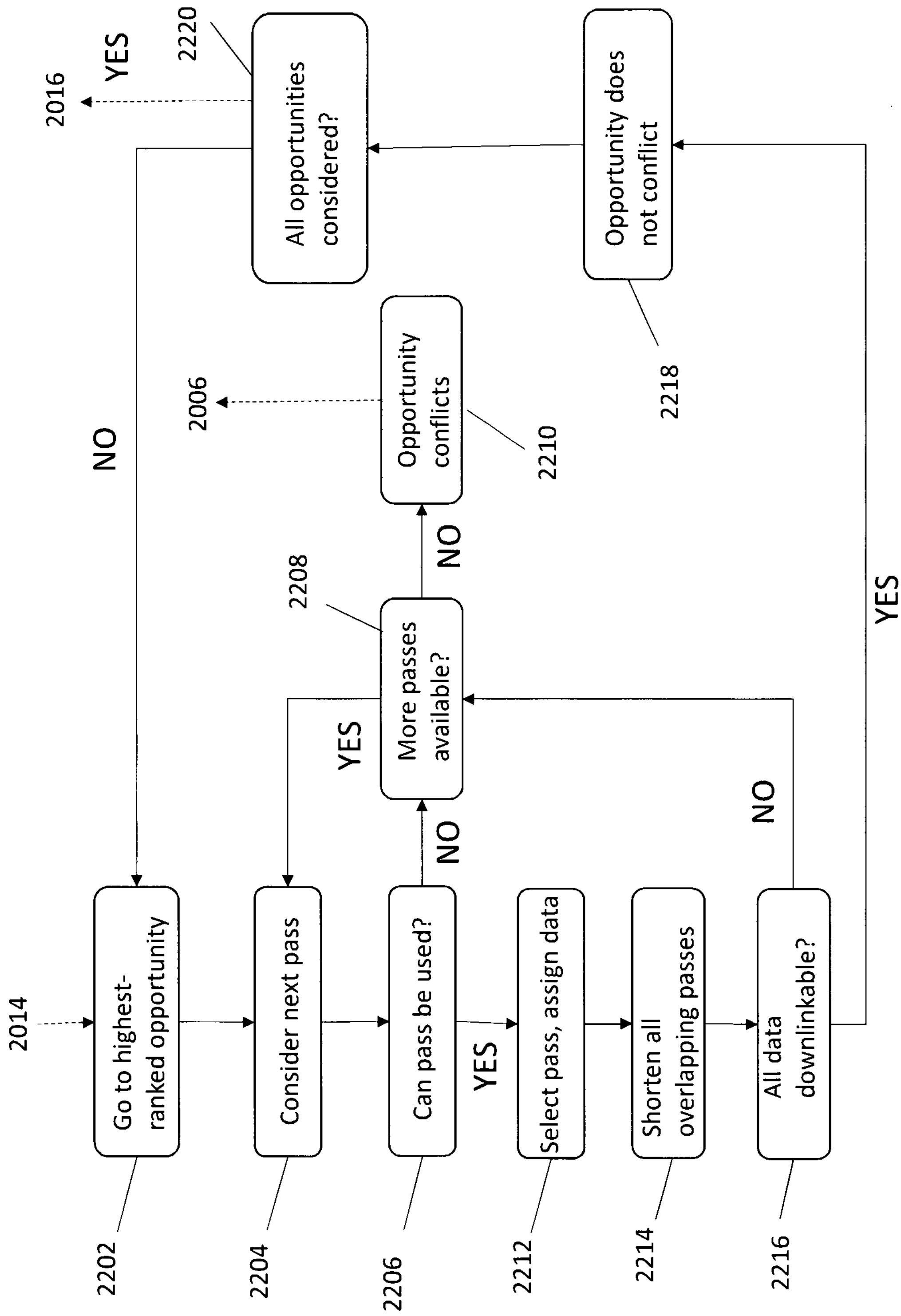
2014
Go to highest-ranked opportunity
2202
Consider next pass
2204
Can pass be used?
2206
YES
Select pass, assign data
2212
Shorten all overlapping passes
2214
All data downlinkable?
2216
NO
More passes available?
2208
YES
NO
Opportunity conflicts
2210
2006
YES
NO
Opportunity does not conflict
2218
All opportunities considered?
2220
YES
2016
NO

FIG. 22

Europäisches Patentamt
European Patent Office
Office européen des brevets

# EUROPEAN SEARCH REPORT

Application Number
EP 24 38 6011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAN JIARONG ET AL: "Task Scheduling of High Dynamic Edge Cluster in Satellite Edge Computing", 2020 IEEE WORLD CONGRESS ON SERVICES (SERVICES), 1 October 2020 (2020-10-01), pages 287-293, XP093195541, DOI: 10.1109/SERVICES48979.2020.00063 * sections I-II; figures 1,2 * | 1-16 | INV. H04B7/185 B64G1/10 |
| X | HU YIFEI ET AL: "An On-Orbit Task-Offloading Strategy Based on Satellite Edge Computing", SENSORS, vol. 23, no. 9, 25 April 2023 (2023-04-25), page 4271, XP093195569, CH ISSN: 1424-8220, DOI: 10.3390/s23094271 * sections 1-5, reference 4. * | 1-16 | |

TECHNICAL FIELDS SEARCHED (IPC)

H04B
B64G

The present search report has been drawn up for all claims

1

| Place of search | Date of completion of the search | Examiner |
|---|---|---|
| The Hague | 16 August 2024 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)